# EUROPEAN PATENT SPECIFICATION

(11) **EP 4 456 063 B1**
(45) Date of publication and mention of the grant of the patent: **14.01.2026**
(21) Application number: 23851265.1
(22) Date of filing: 27.04.2023
(51) Int. Cl.: G10L 19/00, H04M 1/19, H04K 3/00, G10K 11/175, G10K 11/178, H04R 3/12

(54) **VOICE SIGNAL OUTPUT METHOD AND ELECTRONIC DEVICE**
SPRACHSIGNALAUSGABEVERFAHREN UND ELEKTRONISCHE VORRICHTUNG
PROCÉDÉ DE SORTIE DE SIGNAL VOCAL ET DISPOSITIF ÉLECTRONIQUE

(30) Priority: 11.08.2022 CN 202210960657
(43) Date of publication of application: 30.10.2024
(73) Proprietor: Honor Device Co., Ltd., Shenzhen, Guangdong 518040 (CN)
(72) Inventor: YANG, Xiao, Shenzhen, Guangdong 518040 (CN); CHU, Jianfei, Shenzhen, Guangdong 518040 (CN)
(74) Representative: Isarpatent
(86) International application number: PCT/CN2023/091095
(87) International publication number: WO 2024/032035

(56) References cited:
- CN-A- 113 497 849
- CN-A- 113 497 849
- JP-A- 2014 146 941
- KR-A- 20130 127 876
- US-A1- 2005 091 040
- US-A1- 2007 055 513
- US-B2- 7 761 292
- JIAN BAI, CAO PENG: "Capacity Estimation Ｒesearch for Speech Information Hiding", JOURNAL OF BEIJING UNIVERSITY OF POSTS AND TELECOMMUNICATIONS, GAI-KAN BIANJIBU, BEIJING, CN, no. S1, 1 June 2016 (2016-06-01), CN , pages 76 - 80, XP093139834, ISSN: 1007-5321, DOI: 10.13190/j.jbupt.2016.s.018
- O. YILMAZ, S. RICKARD: "Blind Separation of Speech Mixtures via Time-Frequency Masking", IEEE TRANSACTIONS ON SIGNAL PROCESSING, INSTITUTE OF ELECTRICAL AND ELECTRONICS ENGINEERS, vol. 52, no. 7, 1 July 2004 (2004-07-01), pages 1830 - 1847, XP055150683, ISSN: 1053587X, DOI: 10.1109/TSP.2004.828896

## Description

Priority is claimed to Chinese Patent Application No. 202210960657.7, filed with the China National Intellectual Property Administration on August 11, 2022 and entitled "VOICE SIGNAL OUTPUT METHOD AND ELECTRONIC DEVICE".

### TECHNICAL FIELD

This disclosure generally relates to the field of terminal technologies, and the invention, in particular, relates to a voice signal output method, an electronic device, and a computer storage medium.

### BACKGROUND

Currently, to reduce a sound leakage in a handheld call, an electronic device may produce a sound by using a sound production assembly of a ceramic-driven screen. In this case, in a handheld call process of a user, in the sound production assembly of the ceramic-driven screen, a screen sound production area may face an ear of the user. Most of a sound produced by the electronic device may enter the ear of the user, and only an extremely small part of the sound is leaked into an ambient environment. Therefore, another person in the ambient environment cannot clearly hear call content of the user, so that privacy of the user can be well protected.

However, if the user increases a call volume to further increase loudness of the sound in a human ear, driving of a ceramic component in the sound production assembly of the ceramic-driven screen increases. In this case, intensity of a sound leaked around the user also increases, and the another person can clearly hear the call content of the user. This causes disclosure of the privacy of the user and relatively poor user experience.
The technical problem addressed in CN113497849A is the issue of sound leakage from mobile communication devices during calls, which can lead to the disclosure of private or confidential information. It is described here that this problem arises when the listener is in a quiet environment, and the volume of the call is loud enough for bystanders to overhear. The solution proposed in this document involves a sound masking method, device, and terminal equipment that prevent the listener from understanding the information in the sound leakage of the receiver without affecting the call quality. The method includes determining a masking sound signal based on the audio signal being output by the receiver and emitting this masking sound signal through a loudspeaker to mask the audio signal to the far field. The masking sound signal is designed to be less intelligible to bystanders while ensuring that it does not interfere with the listener's ability to hear the call clearly. Various techniques are used to generate the masking sound signal, such as spectrum analysis, time-domain inversion, and interpolation of sound fragments.

### SUMMARY

The object of the present invention is to provide a voice signal output method, an electronic device, and a computer storage medium, to resolve a problem of relatively poor user experience in which increasing a volume in a current handheld call scenario of an electronic device causes leakage of call content of a user. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, the invention provides the following voice signal output method, as according to claim 1. The method is applied to an electronic device, the electronic device includes a first sound production assembly and a second sound production assembly, the first sound production assembly is disposed at a first location of the electronic device, the first location is close to an ear of a user when the user holds the electronic device for a call, and the second sound production assembly is disposed at a second location different from the first location. The method includes: generating a first voice signal, where the first voice signal is an interfering signal generated based on a downlink voice signal; generating a second voice signal, where the second voice signal is a voice signal that is obtained after delay processing is performed on the downlink voice signal and that has a same delay as the first voice signal; and at a same output time, separately outputting the second voice signal by using the first sound production assembly, and outputting the first voice signal by using the second sound production assembly.

In this way, the downlink voice signal can be masked by using the interfering signal generated based on the downlink voice signal. When the user holds the electronic device for a call, intensity of a sound entering the ear of the user is high enough. This can ensure that the user can clearly hear call content. For another person in an ambient environment, because of a masking function of the interfering signal on the downlink voice signal, intensity of a sound transmitted to an ear of the person is relatively low, and information is incomplete. In this case, the person cannot clearly hear the call content of the user, thereby well protecting privacy of the user. Therefore, user experience is better.

According to the invention, the generating a first voice signal includes: generating a first power spectral density, where the first power spectral density is a power spectral density calculated based on the downlink voice signal; and generating the first voice signal based on the first power spectral density.

Also according to the invention, the generating the first voice signal based on the first power spectral density includes: generating a masking signal and a pink noise signal based on the first power spectral density; adjusting the masking signal and the pink noise signal to a same delay; and generating the first voice signal based on the masking signal and the pink noise signal that are adjusted to the same delay.

In this way, the generated first voice signal can mask a signal of a frequency point with a relatively large power spectral density value in the downlink voice signal. After the first voice signal and the second voice signal are simultaneously output subsequently, intensity of a sound entering an ear of another person in the ambient environment of the user is weakened. In this case, the call content of the user cannot be clearly heard. Therefore, privacy of the user can be well protected, and user experience is better.

In an implementation, the generating a masking signal based on the first power spectral density includes: determining a first average power based on the first power spectral density, where the first average power refers to an average value of power spectral density values of all frequency points corresponding to the first power spectral density; determining a first frequency point, where the first frequency point is a frequency point whose corresponding power spectral density value is greater than the first average power and that is in all the frequency points corresponding to the first power spectral density; and generating the masking signal based on the first frequency point.

In this way, a masking sound that can mask a signal with a relatively large power spectral density value in the downlink voice signal can be generated. Subsequently, the signal with the relatively large power spectral density value in the downlink voice signal can be masked, so that intensity of a sound entering an ear of another person in the ambient environment of the user is weakened. In this case, the call content of the user cannot be clearly heard. Therefore, privacy of the user can be further well protected.

In an implementation, the generating the masking signal based on the first frequency point includes: if there are a plurality of the first frequency points, and a frequency value difference between a first frequency point with a largest frequency value and a first frequency point with a smallest frequency value in all the first frequency points is less than a first preset frequency threshold, selecting a first preset quantity of first frequency points from all the first frequency points in descending order of corresponding power spectral density values, and determining the first preset quantity of first frequency points as second frequency points; determining a third frequency point, where the third frequency point is located between two adjacent second frequency points; determining an amplitude corresponding to the third frequency point based on a preset human ear masking effect curve, where the amplitude is used to represent strength of a signal; and generating the masking signal based on a frequency value of the third frequency point and the amplitude corresponding to the third frequency point.

In this way, when frequency points whose power spectral density values are greater than the first average power are relatively concentrated, a relatively accurate masking signal can be determined, and a subsequent masking effect is relatively good.

In an implementation, the generating the masking signal based on the first frequency point includes: if there are a plurality of the first frequency points, and a frequency value difference between a first frequency point with a largest frequency value and a first frequency point with a smallest frequency value in all the first frequency points is greater than or equal to a first preset frequency threshold, selecting, from all the first frequency points, and determining, as fourth frequency points, a first frequency point with a largest corresponding power spectral density value, the first frequency point with the largest frequency value, and the first frequency point with the smallest frequency value; respectively selecting, and determining, as fifth frequency points, one frequency point near each of the fourth frequency points, between the fourth frequency points, and at a location whose frequency value difference is less than or equal to a second preset frequency threshold; determining an amplitude corresponding to the fifth frequency point based on a preset human ear masking effect curve, where the amplitude is used to represent strength of a signal; and generating the masking signal based on a frequency value of the fifth frequency point and the amplitude corresponding to the fifth frequency point.

In this way, when distributions of frequency points whose power spectral density values are greater than the first average power are relatively discrete, and a frequency value difference between a frequency point with a largest frequency value and a frequency point with a smallest frequency value is relatively large, a relatively accurate masking signal can be determined, and a subsequent masking effect is relatively good.

In an implementation, the generating the masking signal based on the first frequency point includes: if there are a plurality of the first frequency points, and a frequency value difference between a first frequency point with a largest frequency value and a first frequency point with a smallest frequency value in all the first frequency points is greater than or equal to a first preset frequency threshold, selecting a second preset quantity of first frequency points in each frequency point interval in descending order of corresponding power spectral density values, and determining the second preset quantity of first frequency points as sixth frequency points, where a frequency value difference between an end frequency point and a start frequency point in each frequency point interval is less than or equal to a third preset frequency threshold, and a quantity of first frequency points included in each frequency point interval is greater than or equal to a third preset quantity; determining a seventh frequency point corresponding to each frequency point interval, where the seventh frequency point is located between two adjacent sixth frequency points in a corresponding frequency point interval; determining an amplitude corresponding to the seventh frequency point based on a preset human ear masking effect curve, where the amplitude is used to represent strength of a signal; and generating the masking signal based on a frequency value of the seventh frequency point and the amplitude corresponding to the seventh frequency point.

In this way, when frequency points whose power spectral density values are greater than the first average power have two or more dense intervals, and a frequency value difference between a frequency point with a largest frequency value and a frequency point with a smallest frequency value is relatively large, a relatively accurate masking signal can be determined, and a subsequent masking effect is relatively good.

In an implementation, the generating the masking signal based on the first frequency point includes: if there is one first frequency point, separately selecting one frequency point on two sides of the first frequency point, and determining the frequency points as eighth frequency points; determining an amplitude corresponding to the eighth frequency point based on a preset human ear masking effect curve, where the amplitude is used to represent strength of a signal; and generating the masking signal based on a frequency value of the eighth frequency point and the amplitude corresponding to the eighth frequency point.

In this way, when there is only one frequency point whose power spectral density value is greater than the first average power, a relatively accurate masking signal can be determined, and a subsequent masking effect is relatively good.

In an implementation, the generating the masking signal based on the first frequency point includes: if there is one first frequency point, separately selecting one frequency point on two sides of the first frequency point, and determining the frequency points as ninth frequency points; respectively selecting one frequency point between each of the ninth frequency points and the first frequency point, and determining the frequency point as a tenth frequency point; determining an amplitude corresponding to the tenth frequency point based on a preset human ear masking effect curve, where the amplitude is used to represent strength of a signal; and generating the masking signal based on a frequency value of the tenth frequency point and the amplitude corresponding to the tenth frequency point.

In this way, when there is only one frequency point whose power spectral density value is greater than the first average power, a relatively accurate masking signal can be determined, and a subsequent masking effect is relatively good.

In an implementation, the generating a pink noise signal based on the first power spectral density includes: determining a second average power, where the second average power refers to an average value of power spectral density values of all eleventh frequency points, the eleventh frequency point is a frequency point whose power spectral density value is less than or equal to a first average power and that is in all frequency points corresponding to the first power spectral density, and the first average power refers to an average value of power spectral density values of all the frequency points corresponding to the first power spectral density; obtaining a preset pink-noise band-pass filtering gain corresponding to the second average power; adjusting a gain of a first band-pass filter to the preset pink-noise band-pass filtering gain; and performing, by using the first band-pass filter obtained after gain adjustment, band-pass filtering on a signal output by a pink noise signal source, to generate the pink noise signal.

In this way, the pink noise signal that can cooperate with the masking signal can be determined, so that a subsequently generated interfering signal can better mask the downlink voice signal, thereby well protecting call privacy of the user.

In an implementation, the generating the first voice signal based on the first power spectral density includes: determining a first average power based on the first power spectral density, where the first average power refers to an average value of power spectral density values of all frequency points corresponding to the first power spectral density; determining twelfth frequency points, where the twelfth frequency point is a frequency point whose corresponding power spectral density value is greater than the first average power and that is in all the frequency points corresponding to the first power spectral density; selecting a fourth preset quantity of twelfth frequency points from all the twelfth frequency points in descending order of corresponding power spectral density values, and determining the fourth preset quantity of twelfth frequency points as thirteenth frequency points; generating a notch filter based on the thirteenth frequency point, where a notch frequency of the notch filter includes a frequency value of the thirteenth frequency point; and performing, by using the notch filter, notch filtering on a signal output by a pink noise signal source, to generate the first voice signal.

In this way, the generated first voice signal can mask most remaining signals in the downlink voice signal other than a signal of a frequency point with a relatively large power spectral density value. After the first voice signal and the second voice signal are simultaneously output subsequently, a sound entering an ear of another person in the ambient environment of the user lacks information about signals of most frequency points. In this case, the call content of the user cannot be clearly heard. This can also well protect privacy of the user, and user experience is better.

In an implementation, the generating a first power spectral density includes: performing band-pass filtering on the downlink voice signal by using a second band-pass filter, to obtain a first signal in a first bandwidth range, where the first bandwidth is a bandwidth of the second band-pass filter; calculating a power spectral density of the first signal; and determining the power spectral density of the first signal as the first power spectral density.

In this way, a signal that is in the downlink voice signal and that cannot be heard by a human ear may be first filtered out by using the second band-pass filter. Therefore, output efficiency of the downlink voice signal can be improved, a call process is smoother, and user experience is better.

In an implementation, the electronic device further includes a third sound production assembly, the third sound production assembly is disposed at a third location close to the first location, and the method further includes: generating a third voice signal, where the third voice signal is a voice signal that is obtained after delay processing is performed on the downlink voice signal and that has the same delay as the first voice signal; and outputting the third voice signal by using the third sound production assembly at the same output time.

In this way, a sound produced by the first sound production assembly can be supplemented by using a sound produced by the third sound production assembly, so that a sound heard by the user is clearer, thereby improving user experience.

According to a second aspect according to the invention, the invention also provides an electronic device, as according to claim 12. The electronic device includes a first sound production assembly and a second sound production assembly, the first sound production assembly is disposed at a first location of the electronic device, the first location is close to an ear of a user when the user holds the electronic device for a call, the second sound production assembly is disposed at a second location different from the first location, the electronic device further includes a memory and a processor, and the memory and the processor are coupled; and the memory is configured to store computer program code, the computer program code includes computer instructions, and when the processor executes the computer instructions, the electronic device is enabled to perform the method according to any implementation of the first aspect.

In this way, the electronic device can mask the downlink voice signal by using an interfering signal generated based on the downlink voice signal. When the user holds the electronic device for a call, intensity of a sound entering the ear of the user is high enough. This can ensure that the user can clearly hear call content. For another person in an ambient environment, because of a masking function of the interfering signal on the downlink voice signal, intensity of a sound transmitted to an ear of the person is relatively low, and information is incomplete. In this case, the person cannot clearly hear the call content of the user, thereby well protecting privacy of the user. Therefore, user experience is better.

According to a third aspect according to the invention, the invention also provides a computer storage medium, as according to claim 13; the computer storage medium stores a computer program or instructions, and when the computer program or the instructions are executed on a processor of the above electronic device, the electronic device carries out the method according to any implementation of the first aspect.

In summary, according to the voice signal output method and the electronic device that are provided in the embodiments of this application, the downlink voice signal can be masked by using the interfering signal generated based on the downlink voice signal. When the user holds the electronic device for a call, the intensity of the sound entering the ear of the user is high enough. This can ensure that the user can clearly hear the call content. For the another person in the ambient environment, because of the masking function of the interfering signal on the downlink voice signal, the intensity of the sound transmitted to the ear of the person is relatively low, and the information is incomplete. In this case, the person cannot clearly hear the call content of the user, thereby well protecting privacy of the user. Therefore, user experience is better.
In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a schematic diagram of a structure of an electronic device according to an embodiment of this application;
FIG. 2 is a block diagram of a software structure of an electronic device according to an embodiment of this application;
FIG. 3 is a schematic flowchart of a voice signal output method according to an embodiment of this application;
FIG. 4 is a schematic diagram of an application scenario according to an embodiment of this application;
FIG. 5 is a schematic flowchart of a method for generating a first voice signal according to an embodiment of this application;
FIG. 6 is a schematic flowchart of a method for generating a first voice signal based on a first power spectral density according to an embodiment of this application;
FIG. 7 is a schematic flowchart of a method for generating a masking signal based on a first power spectral density according to an embodiment of this application;
FIG. 8 is a schematic diagram of another application scenario according to an embodiment of this application;
FIG. 9 is a schematic diagram of another application scenario according to an embodiment of this application;
FIG. 10 is a schematic diagram of another application scenario according to an embodiment of this application;
FIG. 11 is a schematic diagram of another application scenario according to an embodiment of this application;
FIG. 12 is a schematic diagram of another application scenario according to an embodiment of this application;
FIG. 13 is a schematic diagram of another application scenario according to an embodiment of this application;
FIG. 14 is a schematic diagram of another application scenario according to an embodiment of this application;
FIG. 15 is a schematic diagram of another application scenario according to an embodiment of this application;
FIG. 16 is a schematic diagram of another application scenario according to an embodiment of this application;
FIG. 17 is a schematic flowchart of a method for generating a pink noise signal based on a first power spectral density according to an embodiment of this application;
FIG. 18 is a schematic flowchart of another method for generating a first voice signal based on a first power spectral density according to an embodiment of this application; and
FIG. 19 is a block diagram of a structure of an electronic device according to an embodiment of this application.

### DESCRIPTION OF EMBODIMENTS

The following describes the technical solutions of this application with reference to the accompanying drawings.

In the descriptions of this application, unless otherwise specified, "and/or" is merely used to describe an association relationship between associated objects, and represents that three relationships may exist. For example, A and/or B may represent the following three cases: Only A exists, both A and B exist, and only B exists. In addition, "at least one" means one or more, "at least two" means two or more, and "a plurality of" also means two or more. The words such as "first" and "second" do not limit a quantity or an execution sequence, and the words such as "first" and "second" do not indicate a definite difference.

It should be noted that, in this application, words such as "example" or "for example" are used to indicate an example, illustration, or description. Any embodiment or design solution described as "example" or "for example" in this application should not be construed as being preferred or advantageous over other embodiments or design solutions. Exactly, use of the words such as "example" or "for example" is intended to present a related concept in a specific manner.

To facilitate understanding of the technical solutions of this application, the following first provides an example description of an application scenario of the technical solutions provided in this application.

Currently, a plurality of sound production assemblies may be disposed in an electronic device, for example, a sound production assembly of a ceramic-driven screen, a speaker disposed at a top, and a speaker disposed at a bottom. In a handheld call scenario, the electronic device usually produces a sound by using the sound production assembly of the ceramic-driven screen and/or the speaker disposed at the top. In this case, in a handheld call process of a user, in the sound production assembly of the ceramic-driven screen, a screen sound production area may face an ear of the user, or the speaker at the top may be placed close to the ear of the user. Most of a sound produced by the electronic device may enter the ear of the user, and only an extremely small part of the sound is leaked into an ambient environment. Even if there is another person in the ambient environment, call content of the user cannot be clearly heard, so that privacy of the user can be well protected.

However, when the user increases a call volume to further increase loudness of the sound in the ear, ceramic driving further increases, and intensity of a sound produced by the sound production assembly of the ceramic-driven screen and intensity of a sound produced by the speaker disposed at the top also increase. Consequently, intensity of a sound leaked into the ambient environment increases simultaneously. In this case, the another person in the ambient environment can clearly hear the call content of the user. This causes leakage of the call content of the user, and causes disclosure of the privacy of the user and relatively poor user experience.

To resolve the foregoing technical problem, embodiments of this application provide a voice signal output method, an apparatus, and an electronic device. The method may be applied to the electronic device. According to the method, the electronic device may generate an interfering signal based on a downlink voice signal in a call process of a user, and then adjust the downlink voice signal and the interfering signal to a same delay. At a same output time, the downlink voice signal is output by using a first sound production assembly that is in the electronic device and that is close to a human ear, and the interfering signal is output by using a second sound production assembly far away from the human ear, so that the downlink voice signal is masked by using the interfering signal. In this case, another person in an ambient environment cannot clearly hear call content of the user, thereby achieving a purpose of protecting call privacy of the user. Therefore, user experience is better.

It should be noted that the electronic device in this application may be still or mobile. The electronic device may include a device that is in a computer network and that is at an outermost periphery of the network, such as a communication terminal, a vehicle-mounted device, a mobile device, a user terminal, a mobile terminal, a wireless communication device, a portable terminal, a user agent, a user apparatus, a service device, or user equipment (user equipment, UE), and is mainly used for data input, output or display of a processing result, and the like. For example, the terminal device may be a mobile phone, a cordless phone, a smartwatch, a wearable device, a tablet device, a handheld device with a wireless communication function, a computing device, a vehicle-mounted communication module, or another processing device connected to a wireless modem.

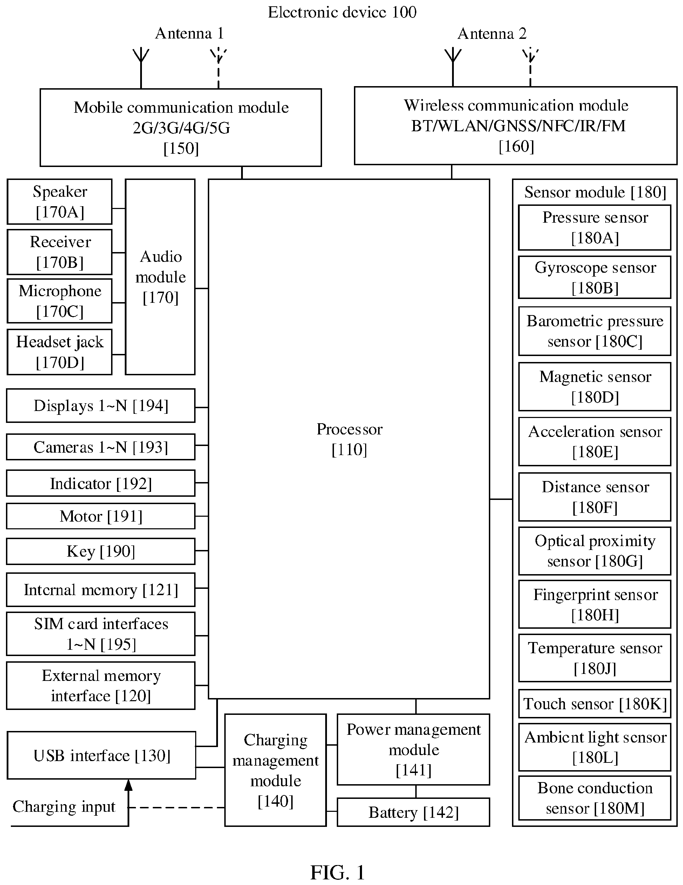

For example, reference may be made to FIG. 1. FIG. 1 is a schematic diagram of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a timing signal, to complete control of instruction fetching and instruction execution.

A memory may be further disposed in the processor 110, and is configured to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (derail clock line, SCL). In some embodiments, the processor 110 may include a plurality of groups of I2C buses. The processor 110 may be separately coupled to the touch sensor 180K, a charger, a flash, the camera 193, and the like by using different I2C bus interfaces. For example, the processor 110 may be coupled to the touch sensor 180K by using the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transmit an audio signal to the wireless communication module 160 by using the I2S interface, to implement a function of answering a call by using a Bluetooth headset.

The PCM interface may also be used for audio communication, to sample, quantize, and encode an analog signal. In some embodiments, the audio module 170 may be coupled to the wireless communication module 160 by using a PCM bus interface. In some embodiments, the audio module 170 may also transmit an audio signal to the wireless communication module 160 by using the PCM interface, to implement the function of answering a call by using the Bluetooth headset. Both the I2S interface and the PCM interface may be used for audio communication.

The UART interface is a universal serial data bus used for asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 by using the UART interface, to implement a Bluetooth function. In some embodiments, the audio module 170 may transfer an audio signal to the wireless communication module 160 by using the UART interface, to implement a function of playing music by using a Bluetooth headset.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 and the camera 193 communicate with each other by using the CSI interface, to implement a shooting function of the electronic device 100. The processor 110 communicates with the display 194 by using the DSI interface, to implement a display function of the electronic device 100.

The GPIO interface may be configured by software. The GPIO interface may be configured as a control signal or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that complies with USB standard specifications, and may be specifically a Mini USB interface, a Micro USB interface, a USB Type C interface, or the like. The USB interface 130 may be configured to be connected to a charger to charge the electronic device 100, or may be configured to transmit data between the electronic device 100 and a peripheral device, or may be configured to connect to a headset to play audio by using the headset. The interface may alternatively be configured to connect to another electronic device, for example, an AR device.

It may be understood that an interface connection relationship between modules illustrated in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input from a wired charger by using the USB interface 130. In some embodiments of wireless charging, the charging management module 140 may receive a wireless charging input by using a wireless charging coil of the electronic device 100. The charging management module 140 may further supply power to the electronic device by using the power management module 141 while charging the battery 142.

The power management module 141 is configured to be connected to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used together with a tuning switch.

The mobile communication module 150 may provide a solution for wireless communication including 2G/3G/4G/5G and the like applied to the electronic device 100. The mobile communication module 150 may include at least one filter, switch, power amplifier, low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (not limited to the speaker 170A, the receiver 170B, and the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display 194, the application processor, and the like. The GPU is a microprocessor for image processing and is connected to the display 194 and the application processor. The GPU is configured to perform mathematical and geometric computing for graphics rendering. The processor 110 may include one or more GPUs, and the one or more GPUs execute program instructions to generate or change displayed information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N displays 194, where N is a positive integer greater than 1. In some other embodiments, the display 194 of the electronic device 100 may also be referred to as a screen 194, and a sound production area may be further disposed on the screen 194 of the electronic device 100. The electronic device 100 may drive, by using a ceramic or another driving component, a screen of the sound production area to produce a sound. In a handheld call scenario, the sound production area on the screen 194 may face a human ear.

The electronic device 100 may implement a shooting function by using the ISP, the camera 193, the video codec, the GPU, the display 194, the application processor, and the like.

The ISP is configured to process data fed back by the camera 193. For example, during shooting, a shutter is opened, and light is transmitted to a camera photosensitive element through a lens. An optical signal is converted into an electrical signal. The camera photosensitive element transmits the electrical signal to the ISP for processing, to convert the electrical signal into an image visible to naked eyes. The ISP may further perform algorithm optimization on noise, brightness, and complexion of the image. The ISP may further optimize parameters such as exposure and color temperature of a shooting scenario. In some embodiments, the ISP may be disposed in the camera 193.

The camera 193 is configured to capture a still image or a video. An optical image of an object is generated through the lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to a digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)1, MPEG2, MPEG3, and MPEG4.

The NPU is a neural-network (neural-network, NN) computing processor, which quickly processes input information by referring to a biological neural network structure, for example, by referring to a transmission mode between human brain neurons, and may further perform self-learning continuously. Applications such as intelligent cognition of the electronic device 100, for example, image recognition, face recognition, voice recognition, and text understanding, may be implemented by using the NPU.

The external memory interface 120 may be configured to connect to an external memory card, for example, a Micro SD card, to expand a storage capability of the electronic device 100. The external memory card communicates with the processor 110 by using the external memory interface 120, to implement a data storage function, for example, to store files such as music and a video in the external memory card.

The internal memory 121 may be configured to store computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (such as audio data and a phone book) and the like created in a use process of the electronic device 100. In addition, the internal memory 121 may include a high-speed random access memory, and may further include a non-volatile memory, for example, at least one magnetic disk storage device, a flash memory device, or a universal flash storage (universal flash storage, UFS). The processor 110 performs various function applications and data processing of the electronic device 100 by running the instructions stored in the internal memory 121 and/or instructions stored in the memory disposed in the processor.

The electronic device 100 may implement an audio function by using the audio module 170, the speaker 170A, the receiver 170B, the microphone 170C, the headset jack 170D, the application processor, and the like, for example, music playing and audio recording.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110.

The speaker 170A, also referred to as a "loudspeaker", is configured to convert an audio electrical signal into a sound signal. The electronic device 100 may be used to listen to music or answer a call in a hands-free mode by using the speaker 170A. A plurality of speakers 170A may be disposed in the electronic device 100. For example, one speaker 170A may be disposed at a top of the electronic device 100, and one speaker 170A may be further disposed at a bottom.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice. In some embodiments, the speaker 170A and the receiver 170B may alternatively be disposed as one component. This is not limited in this application.

The microphone 170C, also referred to as a "mic" or "mike", is configured to convert a sound signal into an electrical signal. When making a call or sending a voice message, a user may make a sound by approaching the mouth to the microphone 170C, to input a sound signal to the microphone 170C. At least one microphone 170C may be disposed in the electronic device 100. In some other embodiments, two microphones 170C may be disposed in the electronic device 100, to implement a noise reduction function in addition to collecting a sound signal. In some other embodiments, three, four, or more microphones 170C may alternatively be disposed in the electronic device 100, to collect a sound signal, reduce noise, further identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, for example, a resistive pressure sensor, an inductive pressure sensor, and a capacitive pressure sensor. The capacitive pressure sensor may include at least two parallel plates having an electrically conductive material. When force is applied onto the pressure sensor 180A, a capacitance between electrodes changes. The electronic device 100 determines intensity of pressure based on a change in the capacitance. When a touch operation is performed on the display 194, the electronic device 100 detects intensity of the touch operation based on the pressure sensor 180A. The electronic device 100 may also calculate a touch location based on a detected signal of the pressure sensor 180A. In some embodiments, touch operations performed at a same touch location but having different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a motion posture of the electronic device 100. In some embodiments, angular velocities of the electronic device 100 around three axes (namely, an x axis, a y axis, and a z axis) may be determined by using the gyroscope sensor 180B. The gyroscope sensor 180B may be configured to implement image stabilization during shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in a navigation scenario and a motion sensing game scenario.

The barometric pressure sensor 180C is configured to measure barometric pressure. In some embodiments, the electronic device 100 calculates an altitude based on a barometric pressure value measured by the barometric pressure sensor 180C, to assist in positioning and navigation.

The magnetic sensor 180D may include a Hall sensor. The electronic device 100 may detect opening/closing of a flip leather case by using the magnetic sensor 180D. In some embodiments, when the electronic device 100 is a flip phone, the electronic device 100 may detect opening/closing of a flip cover based on the magnetic sensor 180D, and further set features such as automatic unlocking of the flip cover based on a detected opening/closing state of the leather case or a detected opening/closing state of the flip cover.

The acceleration sensor 180E may detect magnitudes of acceleration in various directions (usually on three axes) of the electronic device 100, may detect a magnitude and a direction of gravity when the electronic device 100 is still, and may be further configured to identify a posture of the electronic device, and is applied to applications such as switching between a landscape mode and a portrait mode and a pedometer.

The distance sensor 180F is configured to measure a distance. The electronic device 100 may measure a distance in an infrared or laser manner. In some embodiments, in a shooting scenario, the electronic device 100 may measure a distance by using the distance sensor 180F, to implement fast focusing.

The optical proximity sensor 180G may include, for example, a light-emitting diode (LED) and an optical detector, for example, a photodiode. The light-emitting diode may be an infrared light-emitting diode. The electronic device 100 emits infrared light to the outside by using the light-emitting diode. The electronic device 100 uses the photodiode to detect reflected infrared light from a nearby object. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to implement automatic screen-off to save power. The optical proximity sensor 180G may alternatively be used in a leather case mode or a pocket mode to automatically unlock or lock a screen.

The ambient light sensor 180L is configured to sense ambient light brightness. The electronic device 100 may adaptively adjust brightness of the display 194 based on the sensed ambient light brightness. The ambient light sensor 180L may be further configured to automatically adjust white balance during shooting. The ambient light sensor 180L may further cooperate with the optical proximity sensor 180G to detect whether the electronic device 100 is in a pocket to prevent an accidental touch.

The fingerprint sensor 180H is configured to collect a fingerprint. The electronic device 100 may implement fingerprint unlocking, application lock accessing, fingerprint-based shooting, fingerprint-based call answering, and the like by using a feature of the collected fingerprint.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 degrades performance of a processor located near the temperature sensor 180J, to reduce power consumption and implement thermal protection. In some other embodiments, when the temperature is less than another threshold, the electronic device 100 heats the battery 142, to prevent the electronic device 100 from being abnormally powered off due to a low temperature. In some other embodiments, when the temperature is less than still another threshold, the electronic device 100 boosts an output voltage of the battery 142, to avoid abnormal power-off due to a low temperature.

The touch sensor 180K is also referred to as a "touch control device". The touch sensor 180K may be disposed on the display 194. The touch sensor 180K and the display 194 form a touchscreen, also referred to as a "touch control screen". The touch sensor 180K is configured to detect a touch operation performed on or near the touch sensor 180K. The touch sensor may transmit a detected touch operation to the application processor to determine a type of a touch event. A visual output related to the touch operation may be provided by using the display 194. In some other embodiments, the touch sensor 180K may alternatively be disposed on a surface of the electronic device 100, at a location different from that of the display 194.

The bone conduction sensor 180M may obtain a vibration signal. In some embodiments, the bone conduction sensor 180M may obtain a vibration signal of a vibration bone in a human vocal-cord part. The bone conduction sensor 180M may also be in contact with a human pulse to receive a blood pressure pulse signal. In some embodiments, the bone conduction sensor 180M may alternatively be disposed in a headset, to form a bone conduction headset in combination with the headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure pulse signal obtained by the bone conduction sensor 180M, to implement a heart rate detection function.

The key 190 includes a power-on/off key, a volume key, and the like. The key 190 may be a mechanical key, or may be a touch key. The electronic device 100 may receive a key input and generate a key signal input related to user settings and function control of the electronic device 100.

The motor 191 may generate a vibration prompt. The motor 191 may be configured to provide a vibration prompt for an incoming call, and may be further configured to provide vibration feedback for a touch. For example, touch operations performed on different applications (for example, shooting and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging status or a power change, and may be further configured to indicate a message, a missed incoming call, a notification, and the like.

The SIM card interface 195 is configured to be connected to a SIM card. The SIM card may be inserted into the SIM card interface 195 or removed from the SIM card interface 195 to implement contact with and separation from the electronic device 100. The electronic device 100 may support one or N SIM card interfaces, where N is a positive integer greater than 1. The SIM card interface 195 may support a Nano SIM card, a Micro SIM card, a SIM card, and the like. A plurality of cards may be simultaneously inserted into a same SIM card interface 195. The plurality of cards may be of a same type or different types. The SIM card interface 195 may also be compatible with SIM cards of different types. The SIM card interface 195 may be further compatible with the external memory card. The electronic device 100 interacts with a network by using the SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

A software system of the electronic device 100 may use a layered architecture, an event-driven architecture, a microkernel architecture, a microservice architecture, or a cloud architecture. In this embodiment of the present invention, an Android system with a layered architecture is used as an example to describe a software structure of the electronic device 100.

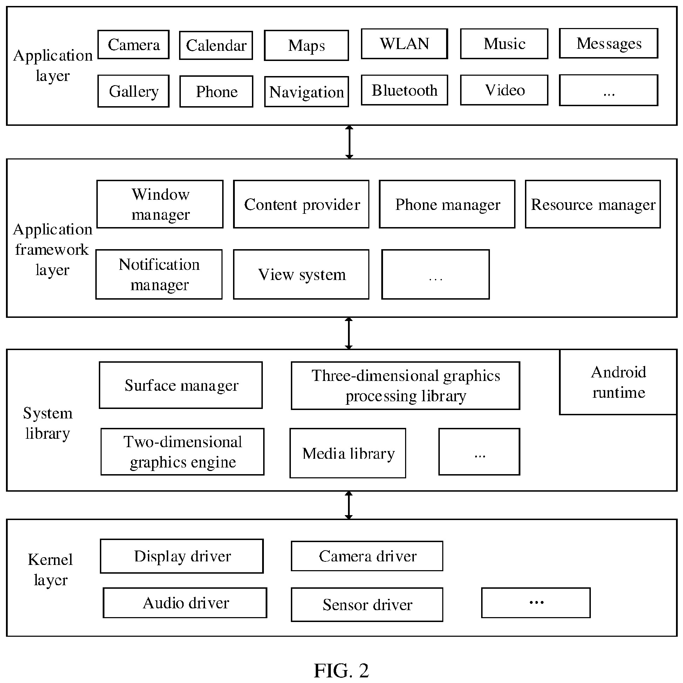

FIG. 2 is a block diagram of a software structure of an electronic device 100 according to an embodiment of this application.

In a layered architecture, software is divided into several layers, and each layer has a clear role and task. The layers communicate with each other by using software interfaces. In some embodiments, the Android system is divided into four layers, which are respectively an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Maps, Navigation, WLAN, Bluetooth, Music, Video, and Messages.

The application framework layer provides an application programming interface (application programming interface, API) and a programming framework for the applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether a status bar exists, lock a screen, take a screenshot, and the like.

The content provider is configured to store and obtain data, and enable the data to be accessible to an application. The data may include a video, an image, audio, calls that are made and answered, a browsing history and bookmarks, a phone book, and the like.

The view system includes visual controls such as a text display control and a picture display control. The view system may be configured to construct an application. A display interface may include one or more views. For example, a display interface including an SMS message notification icon may include a view for displaying text and a view for displaying a picture.

The phone manager is configured to provide the electronic device 100 with a communication function, for example, call status management (including answering, hanging up, and the like).

The resource manager provides various resources for an application, for example, a localized string, an icon, a picture, a layout file, and a video file.

The notification manager enables an application to display notification information in a status bar, and may be configured to convey a notification-type message. The displayed notification information may automatically disappear after a short stay without user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert sound is made, the electronic device vibrates, or an indicator light blinks.

The Android Runtime includes a kernel library and a virtual machine. The Android runtime is responsible for scheduling and management of an Android system.

The kernel library includes two parts: One part is a functional function that needs to be invoked by a java language, and the other part is a kernel library of Android.

The application layer and the application framework layer are run in the virtual machine. The virtual machine executes java files at the application layer and the application framework layer as binary files. The virtual machine is configured to perform functions such as lifecycle management of an object, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports playing and recording in a plurality of common audio and video formats, a still image file, and the like. The media library may support a plurality of audio and video coding formats, such as MPEG4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes example working procedures of software and hardware of the electronic device 100 with reference to a capturing and shooting scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a touch single-tap operation, and a control corresponding to the single-tap operation is a control of a camera application icon. A camera application invokes an interface of the application framework layer to start the camera application, so that the kernel layer is invoked to start the camera driver, and the camera 193 captures a still image or a video.

The following describes an embodiment of a voice signal output method provided in this application.

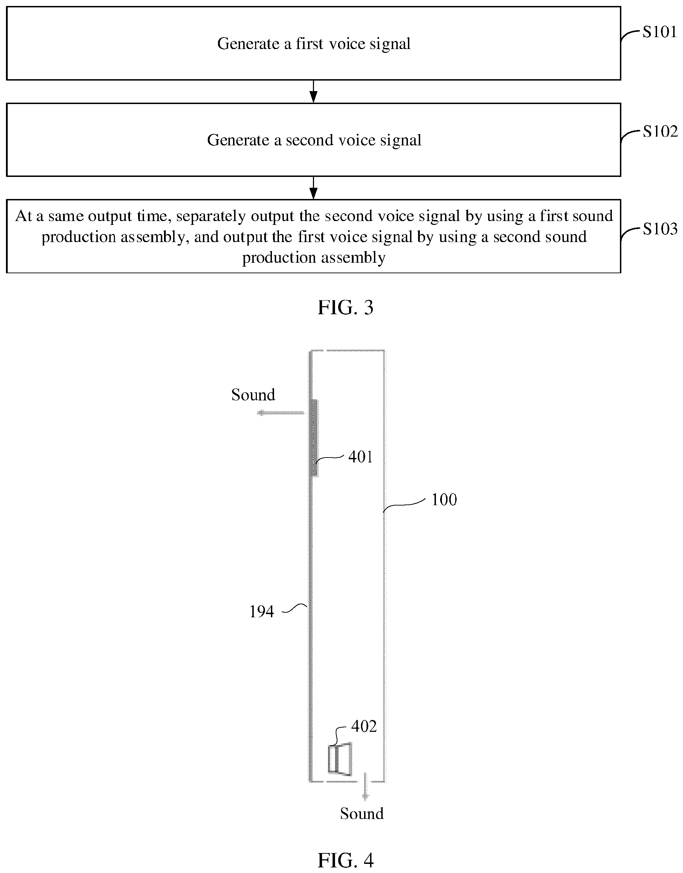

Reference is made to FIG. 3. FIG. 3 is a schematic flowchart of a voice signal output method according to an embodiment of this application. The method may be applied to an electronic device, and a first sound production assembly and a second sound production assembly are disposed in the electronic device. The first sound production assembly may be disposed at a first location of the electronic device. When a user holds the electronic device for a call, that is, when the electronic device is in a handheld call application scenario, the first location is close to an ear of the user. The second sound production assembly may be disposed at a second location that is in the electronic device and that is different from the first location.

For example, reference is made to FIG. 4. FIG. 4 is a schematic diagram of an application scenario according to an embodiment of this application. As shown in FIG. 4, the first location may be located on the screen 194 of the electronic device 100, and a first sound production assembly 401 may be a sound production assembly of a ceramic-driven screen. The second location may be located at a bottom of the electronic device 100, and a second sound production assembly 402 may be a speaker disposed at the bottom of the electronic device 100.

It should be noted that the first location and the second location may alternatively be located at other locations of the electronic device. For example, the first location may alternatively be located at a top of the electronic device and a location above the screen. The second location may alternatively be located on a side of the electronic device or the like. This is not limited in this application. Similarly, the first sound production assembly and the second sound production assembly may alternatively be disposed as other sound production assemblies. For example, the first sound production assembly may alternatively be a speaker disposed at the top of the electronic device, and the second sound production assembly may alternatively be a speaker disposed on the side of the electronic device. This is not limited in this application.

As shown in FIG. 3, the method may include the following steps.

Step S101: Generate a first voice signal.

The first voice signal is an interfering signal generated based on a downlink voice signal. The downlink voice signal may be a downlink voice signal in a user call.

It should be noted that in the handheld call application scenario, an electronic device held by the user (referred to as an electronic device below) may continuously receive, in real time, downlink voice signals transmitted by another terminal device (referred to as a terminal device below) to the electronic device. Each time after a downlink voice signal is received, the electronic device may process, according to the voice signal output method provided in this embodiment of this application, the downlink voice signal received this time, and then output a processed downlink voice signal.

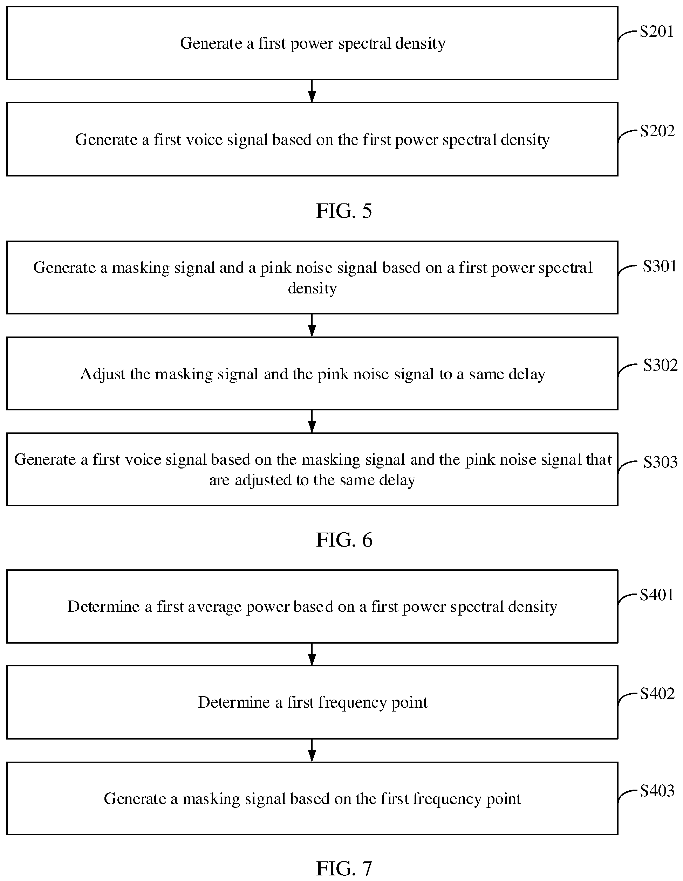

As shown in FIG. 5, generating the first voice signal may be implemented according to the following steps:

Step S201: Generate a first power spectral density.

The first power spectral density is a power spectral density calculated based on the downlink voice signal.

In a possible implementation, the first power spectral density may be a power spectral density of the downlink voice signal. In specific implementation, the power spectral density of the downlink voice signal may be first calculated by using an autocorrelation function method, and then the calculated power spectral density of the downlink voice signal is determined as the first power spectral density.

In another possible implementation, band-pass filtering may alternatively be first performed on the downlink voice signal by using a preset second band-pass filter, to obtain a first signal in a first bandwidth range, and the first bandwidth is a bandwidth of the second band-pass filter. Then, a power spectral density of the first signal is calculated by using the autocorrelation function method, and then the calculated power spectral density of the first signal is determined as the first power spectral density. In this way, a signal that is in the downlink voice signal and that cannot be heard by a human ear may be first filtered out by using the second band-pass filter. Therefore, output efficiency of the downlink voice signal can be improved, a call process is smoother, and user experience is better.

Step S202: Generate the first voice signal based on the first power spectral density.

In specific implementation, the generating the first voice signal based on the first power spectral density may include a plurality of implementations. For example, as shown in FIG. 6, generating the first voice signal based on the first power spectral density may be implemented according to the following steps:

Step S301: Generate a masking signal and a pink noise signal based on the first power spectral density.

The masking signal may be used to mask the downlink voice signal. After the two signals are simultaneously output, intensity of a sound signal that corresponds to the downlink voice signal and that enters an ear of another person in an ambient environment is weakened, and information is incomplete. Even if the user increases a volume, another person in the ambient environment cannot clearly hear call content of the user. Therefore, privacy of the user can be well protected.

As shown in FIG. 7, generating the masking signal based on the first power spectral density may be implemented according to the following steps:

Step S401: Determine a first average power based on the first power spectral density.

The first average power refers to an average value of power spectral density values of all frequency points corresponding to the first power spectral density.

Step S402: Determine a first frequency point.

The first frequency point is a frequency point whose corresponding power spectral density value is greater than the first average power and that is in all the frequency points corresponding to the first power spectral density.

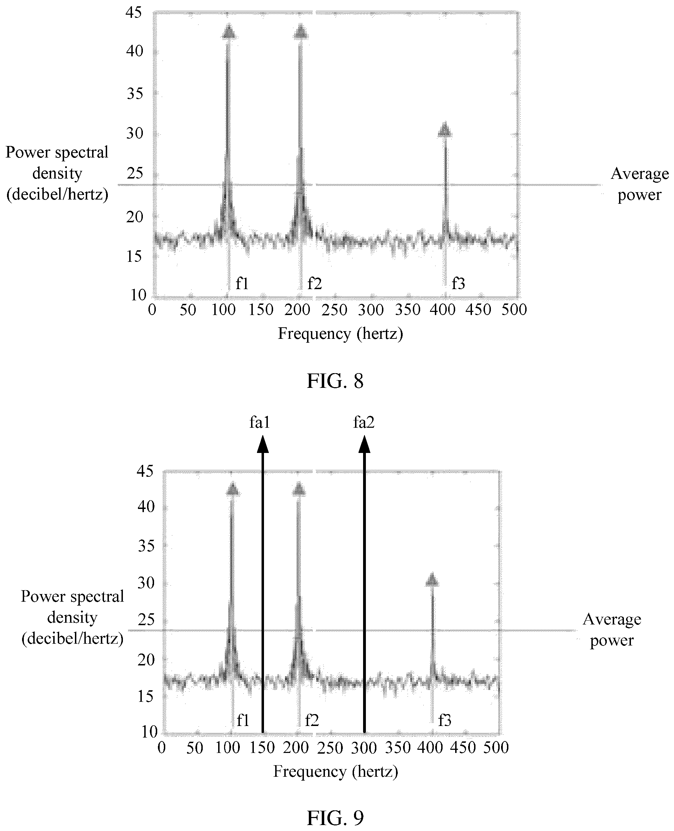

For example, as shown in FIG. 8, in all the frequency points corresponding to the first power spectral density, if power spectral density values corresponding to frequency points f1, f2, and f3 are greater than the first average power, the frequency points f1, f2, and f3 may be determined as first frequency points.

Step S403: Generate the masking signal based on the first frequency point.

In specific implementation, there may be one or more first frequency points. Based on this, there may also be a plurality of implementations of generating the masking signal based on the first frequency point.

For example, if there are a plurality of the first frequency points, and a frequency value difference between a first frequency point with a largest frequency value and a first frequency point with a smallest frequency value in all the first frequency points is less than a first preset frequency threshold, a first preset quantity of first frequency points are selected from all the first frequency points in descending order of corresponding power spectral density values, and are determined as second frequency points. The first preset frequency threshold may be set based on a requirement of an actual application scenario, for example, may be set to 1000 HZ. The first preset quantity may also be set based on a requirement of an actual application scenario, for example, may be set to 3 or 5.

Then, a third frequency point is determined, and the third frequency point is located between two adjacent second frequency points. That is, one third frequency point may be selected between every two adjacent second frequency points. The determined third frequency point may be used as a frequency point of a single masking sound. Optionally, any one frequency point may be selected between the two adjacent second frequency points and determined as the third frequency point. Optionally, a frequency point located in a middle of the two adjacent second frequency points may alternatively be selected as the third frequency point. This is not limited in this application.

Then, an amplitude corresponding to the third frequency point may be determined based on a preset human ear masking effect curve, and the amplitude may be used to represent strength of a signal. Finally, the masking signal may be generated based on a frequency value of the third frequency point and the amplitude corresponding to the third frequency point. The masking signal includes a signal whose frequency is the frequency value corresponding to the third frequency point and whose amplitude is the amplitude corresponding to the corresponding third frequency point.

In specific implementation, a frequency value (denoted below as a preset frequency value; unit: hertz Hz) and an amplitude (denoted below as a preset amplitude) corresponding to a point included in the human ear masking effect curve may be correspondingly stored in the electronic device. When the amplitude corresponding to the third frequency point is determined based on the preset human ear masking effect curve, a preset frequency value that is the same as the frequency value of the third frequency point may be selected from the stored preset frequency value. Then, a preset amplitude that is stored corresponding to the selected preset frequency value is determined as the amplitude corresponding to the third frequency point. The amplitude may be sound intensity, and a unit is decibel (dB). Alternatively, the amplitude may be a power spectral density value, and a unit is decibel/hertz. Alternatively, the amplitude may be a power or the like. This is not limited in this application. Alternatively, if the preset frequency value that is the same as the frequency value of the third frequency point is not found from the stored preset frequency value, the amplitude corresponding to the third frequency point may be determined in an interpolation manner based on the correspondingly stored preset frequency value and preset amplitude.

For example, still as shown in FIG. 8, there are three first frequency points, which are respectively f1, f2, and f3. A frequency value of the first frequency point f3 with a largest frequency value is 400 HZ, a frequency value of the first frequency point f1 with a smallest frequency value is 100 HZ, and a frequency value difference between the first frequency point f3 and the first frequency point f1 is 300 HZ, which is less than 1000 HZ. In this case, all the first frequency points f1, f2, and f3 may be determined as second frequency points.

Then, as shown in FIG. 9, a frequency point fa1 may be selected between the second frequency point f1 and the second frequency point f2, and a frequency point fa2 may be further selected between the second frequency point f2 and the second frequency point f3. Then, the frequency point fa1 and the frequency point fa2 are determined as third frequency points.

Then, preset frequency values that are the same as a frequency value of the third frequency point fa1 and a frequency value of the third frequency point fa2 may be respectively found from preset frequency values stored in advance. Then, corresponding preset amplitudes are respectively found, to determine an amplitude corresponding to the third frequency point fa1 and an amplitude corresponding to the third frequency point fa2. Further, the masking signal is determined.

For example, if there are a plurality of the first frequency points, and a frequency value difference between a first frequency point with a largest frequency value and a first frequency point with a smallest frequency value in all the first frequency points is greater than or equal to a first preset frequency threshold, a first frequency point with a largest corresponding power spectral density value, the first frequency point with the largest frequency value, and the first frequency point with the smallest frequency value are selected from all the first frequency points, and are determined as fourth frequency points.

Then, one frequency point is respectively selected between each fourth frequency point and a first frequency point adjacent to each fourth frequency point, and is determined as a fifth frequency point. Alternatively, one frequency point near each fourth frequency point, between the fourth frequency points, and at a location whose frequency value difference is less than or equal to a second preset frequency threshold may be respectively selected, and determined as fifth frequency points. In other words, a frequency value difference between each fifth frequency point and a fourth frequency point adjacent to each fifth frequency point is less than or equal to the second preset frequency threshold. The second preset frequency threshold may be set based on a requirement of an actual application scenario. For example, the second preset frequency threshold may be set to 5 Hz, 20 Hz, or 50 Hz.

Then, an amplitude corresponding to the fifth frequency point is determined based on a preset human ear masking effect curve. For specific content of the amplitude, refer to the content of the foregoing embodiment. Details are not described herein again. Finally, the masking signal is generated based on a frequency value of the fifth frequency point and the amplitude corresponding to the fifth frequency point. The masking signal includes a signal whose frequency is the frequency value corresponding to the fifth frequency point and whose amplitude is the amplitude corresponding to the corresponding fifth frequency point.

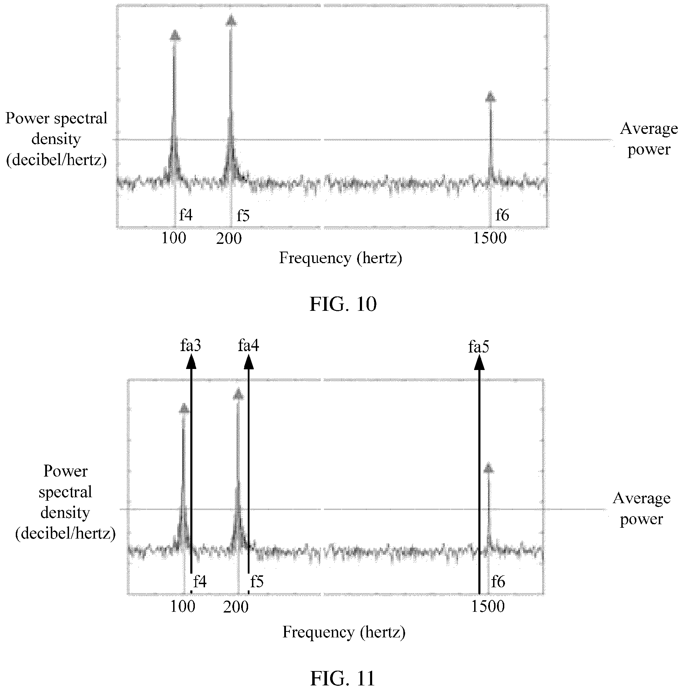

For example, as shown in FIG. 10, there are three first frequency points, which are respectively frequency points f4, f5, and f6. A power spectral density value corresponding to the first frequency point f5 is the largest. A frequency value of the first frequency point f6 with a largest frequency value is 1500 HZ, a frequency value of the first frequency point f4 with a smallest frequency value is 100 HZ, and a frequency value difference between the first frequency point f6 and the first frequency point f4 is 1400 HZ, which is greater than 1000 HZ. In this case, all the first frequency points f4, f5, and f6 may be determined as fourth frequency points.

Then, as shown in FIG. 11, frequency points fa3, fa4, and fa5 may be respectively selected near the fourth frequency points f4, f5, and f6, and then the frequency points fa3, fa4, and fa5 are determined as fifth frequency points.

Then, preset frequency values that are the same as a frequency value of the fifth frequency point fa3, a frequency value of the fifth frequency point fa4, and a frequency value of the fifth frequency point fa5 may be respectively found from preset frequency values stored in advance. Then, corresponding preset amplitudes are respectively found, to determine an amplitude corresponding to the fifth frequency point fa3, an amplitude corresponding to the fifth frequency point fa4, and an amplitude corresponding to the fifth frequency point fa5. Further, the masking signal is determined.

For a specific implementation process, still refer to the content of the foregoing embodiment. Details are not described herein again.

For example, if there are a plurality of the first frequency points, and a frequency value difference between a first frequency point with a largest frequency value and a first frequency point with a smallest frequency value in all the first frequency points is greater than or equal to a first preset frequency threshold, a second preset quantity of first frequency points are selected in each frequency point interval in descending order of corresponding power spectral density values, and are determined as sixth frequency points. A frequency value difference between an end frequency point and a start frequency point in each frequency point interval is less than or equal to a third preset frequency threshold, and a quantity of first frequency points included in each frequency point interval is greater than or equal to a third preset quantity. The second preset quantity may be set based on a requirement of an actual application scenario. For example, the second preset quantity may be set to 3 or 5. The third preset frequency threshold may also be set based on a requirement of an actual application scenario. For example, the third preset frequency threshold may be set to 50 hertz or 100 hertz. The third preset quantity may also be set based on a requirement of an actual application scenario. For example, the third preset quantity may be set to 8 or 10. This is not limited in this application.

Then, a seventh frequency point corresponding to each frequency point interval is determined, and the seventh frequency point is located between two adjacent sixth frequency points in a corresponding frequency point interval. That is, in each frequency point interval, one frequency point is respectively selected between every two adjacent sixth frequency points, and is determined as the seventh frequency point corresponding to the frequency point interval. Optionally, any one frequency point may be selected between two adjacent sixth frequency points as the seventh frequency point. Optionally, a frequency point in a middle of two adjacent sixth frequency points may alternatively be used as the seventh frequency point. This is not limited in this application.

Then, an amplitude corresponding to each seventh frequency point may be determined based on a preset human ear masking effect curve. For specific content of the amplitude, refer to the content of the foregoing embodiment. Details are not described herein again. Finally, the masking signal may be generated based on a frequency value of each seventh frequency point and the amplitude corresponding to each seventh frequency point. The masking signal includes a signal whose frequency value is the frequency value of the seventh frequency point and whose amplitude is the amplitude corresponding to the seventh frequency point.

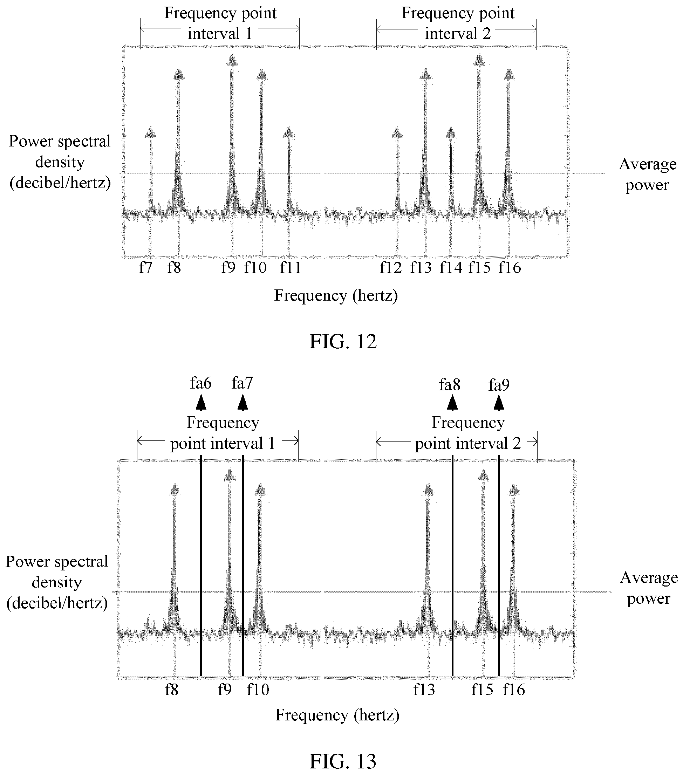

For example, as shown in FIG. 12, there are 10 first frequency points, the first frequency points f7, f8, f9, f10, and f11 are concentrated in one frequency point interval (for example, a frequency point interval 1), and the first frequency points f12, f13, f14, f15, and f16 are concentrated in one frequency point interval (for example, a frequency point interval 2). In the frequency point interval 1, f8, f9, and f10 may be selected in descending order of power spectral density values corresponding to the first frequency points, and determined as sixth frequency points. In addition, in the frequency point interval 2, f13, f15, and f16 are selected in descending order of power spectral density values corresponding to the first frequency points, and are determined as sixth frequency points.

Then, as shown in FIG. 13, in the frequency point interval 1, a frequency point fa6 is selected between the sixth frequency points f8 and f9, and is determined as a seventh frequency point; and a frequency point fa7 is selected between the sixth frequency points f9 and f10, and is determined as a seventh frequency point. In the frequency point interval 2, a frequency point fa8 is selected between the sixth frequency points f13 and f15, and is determined as a seventh frequency point; and a frequency point fa9 is selected between the sixth frequency points f15 and f16, and is determined as a seventh frequency point.

Then, preset frequency values that are the same as a frequency value of the seventh frequency point fa6, a frequency value of the seventh frequency point fa7, a frequency value of the seventh frequency point fa8, and a frequency value of the seventh frequency point fa9 may be respectively found from preset frequency values stored in advance. Then, corresponding preset amplitudes are respectively found, to determine an amplitude corresponding to the seventh frequency point fa6, an amplitude corresponding to the seventh frequency point fa7, an amplitude corresponding to the seventh frequency point fa8, and an amplitude corresponding to the seventh frequency point fa9. Further, the masking signal is determined.

For a specific implementation process, still refer to the content of the foregoing embodiment. Details are not described herein again.

For example, if there is one first frequency point, one frequency point may be separately selected on two sides of the first frequency point, and determined as eighth frequency points. In specific implementation, frequency values of the eighth frequency point and the first frequency point may differ by a fourth preset frequency threshold. The fourth preset frequency threshold may be set based on a requirement of an actual application scenario. For example, the fourth preset frequency threshold may be set to 5 Hz, 10 Hz, or 20 Hz.

Then, an amplitude corresponding to the eighth frequency point may be determined based on a preset human ear masking effect curve. For content of the amplitude, refer to the content of the foregoing embodiment. Details are not described herein again.

Then, the masking signal may be generated based on a frequency value of the eighth frequency point and the amplitude corresponding to the eighth frequency point. The masking signal includes a signal whose frequency value is the frequency value of the eighth frequency point and whose amplitude is the amplitude corresponding to the eighth frequency point.

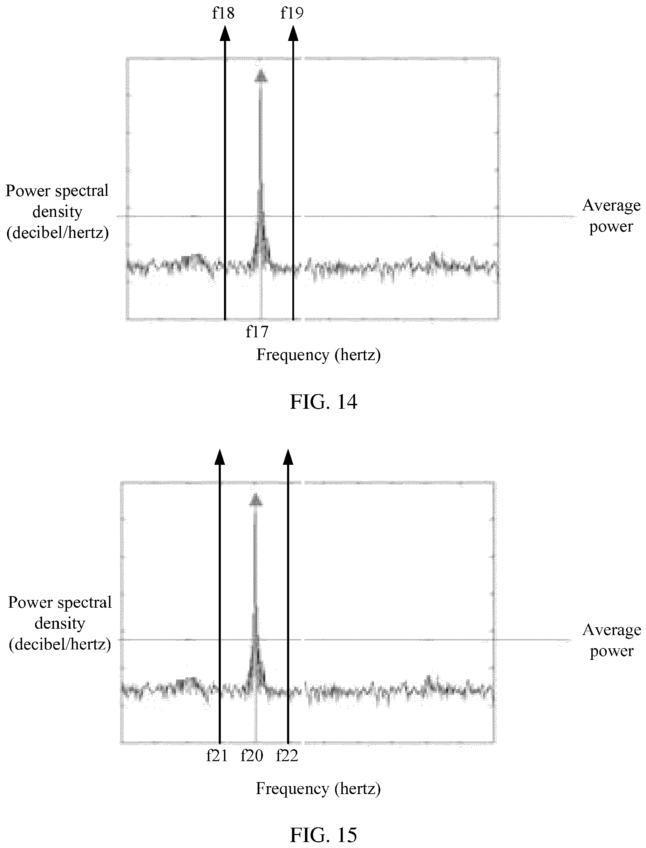

For example, as shown in FIG. 14, there is only one first frequency point, which is a frequency point f17. In this case, a frequency point f18 and a frequency point f19 may be respectively selected on two sides of the first frequency point f17, and determined as eighth frequency points.

Then, a preset frequency value that is the same as a frequency value of the eighth frequency point f18 and a preset frequency value that is the same as a frequency value of the eighth frequency point f19 may be respectively found from preset frequency values stored in advance. Then, corresponding preset amplitudes are respectively found, to determine an amplitude corresponding to the eighth frequency point f18 and an amplitude corresponding to the eighth frequency point f19. Further, the masking signal is determined.

For a specific implementation process, still refer to the content of the foregoing embodiment. Details are not described herein again.

For example, if there is one first frequency point, one frequency point may be separately selected on two sides of the first frequency point, and determined as ninth frequency points. In specific implementation, frequency values of the ninth frequency point and the first frequency point may differ by a fifth preset frequency threshold. The fifth preset frequency threshold may be set based on a requirement of an actual application scenario. For example, the fifth preset frequency threshold may be set to 5 Hz, 10 Hz, or 20 Hz.

Then, one frequency point is separately selected between the ninth frequency points and the first frequency point, and is determined as a tenth frequency point. That is, one frequency point is respectively selected between each ninth frequency point and the first frequency point, and is determined as the tenth frequency point.

Then, an amplitude corresponding to the tenth frequency point may be determined based on a preset human ear masking effect curve. For content of the amplitude, refer to the content of the foregoing embodiment. Details are not described herein again. Finally, the masking signal may be generated based on a frequency value of the tenth frequency point and the amplitude corresponding to the tenth frequency point. The masking signal includes a signal whose frequency is the frequency value corresponding to the tenth frequency point and whose amplitude is the amplitude corresponding to the corresponding tenth frequency point.

For example, as shown in FIG. 15, there is only one first frequency point, which is a frequency point f20. In this case, a frequency point f21 and a frequency point f22 may be respectively selected on two sides of the first frequency point f20, and determined as ninth frequency points.

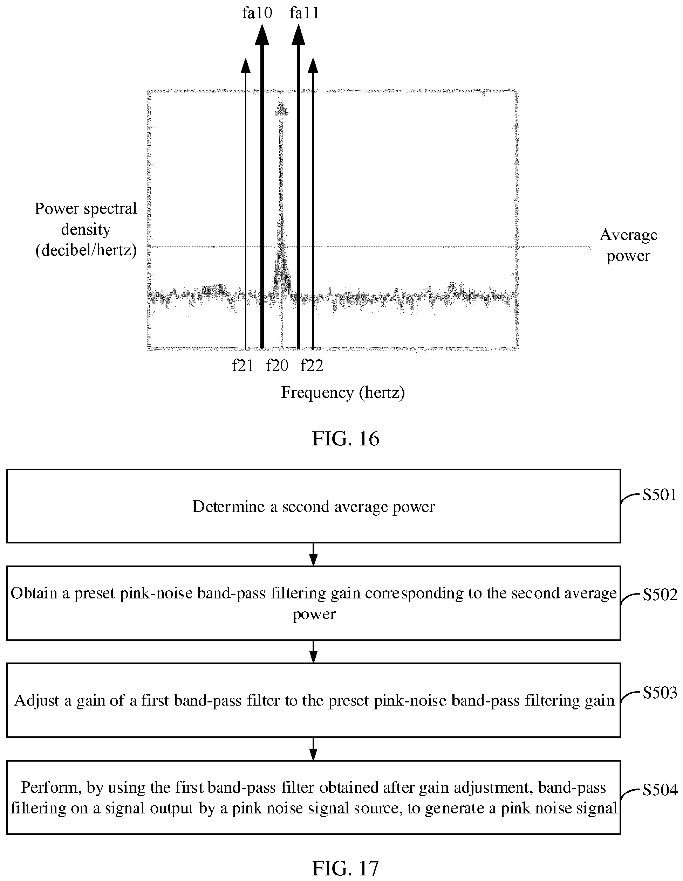

Then, as shown in FIG. 16, one frequency point may be separately selected between the ninth frequency point f21 and the first frequency point f20, and between the ninth frequency point f22 and the first frequency point f20, which are respectively frequency points fa10 and fa11, and determined as tenth frequency points.

Then, preset frequency values that are the same as a frequency value of the tenth frequency point fa10 and a frequency value of the tenth frequency point fa11 may be respectively found from preset frequency values stored in advance. Then, corresponding preset amplitudes are respectively found, to determine an amplitude corresponding to the tenth frequency point fa10 and an amplitude corresponding to the tenth frequency point fa11. Further, the masking signal is determined.

For a specific implementation process, still refer to the content of the foregoing embodiment. Details are not described herein again.

As shown in FIG. 17, generating the pink noise signal based on the first power spectral density may be implemented according to the following steps:
Step S501: Determine a second average power.

The second average power refers to an average value of power spectral density values of all eleventh frequency points. The eleventh frequency point is a frequency point whose power spectral density value is less than or equal to a first average power and that is in all frequency points corresponding to the first power spectral density. The first average power refers to an average value of power spectral density values of all the frequency points corresponding to the first power spectral density.

Step S502: Obtain a preset pink-noise band-pass filtering gain corresponding to the second average power.

In specific implementation, a gain rule table may be preset in the electronic device based on a plurality of call tests. The gain rule table correspondingly stores a power (subsequently referred to as a preset power) and a pink-noise band-pass filtering gain (subsequently referred to as a preset pink-noise band-pass filtering gain).

When step S502 is performed, the electronic device may find, from the preset gain rule table, a preset power that is the same as the second average power; then, find, from the gain rule table, a preset pink-noise band-pass filtering gain that is stored corresponding to the preset power; and determine the preset pink-noise band-pass filtering gain as a preset pink-noise band-pass filtering gain corresponding to the second average power.

Step S503: Adjust a gain of a first band-pass filter to the preset pink-noise band-pass filtering gain.

The first band-pass filter is disposed in the electronic device in advance, and is configured to perform band-pass filtering on a signal output by a pink noise signal source.

Step S504: Perform, by using the first band-pass filter obtained after gain adjustment, band-pass filtering on the signal output by the pink noise signal source, to generate the pink noise signal.

It should be noted that if the first power spectral density generated in step S201 is the power spectral density of the first signal, when step S504 is performed, a bandwidth of the first band-pass filter further needs to be set to a first bandwidth. Then, the first band-pass filter whose bandwidth is the first bandwidth and whose gain is the preset pink-noise band-pass filtering gain corresponding to the second average power is used to perform band-pass filtering on the signal output by the pink noise signal source, to generate the pink noise signal.

Step S302: Adjust the masking signal and the pink noise signal to a same delay.

After the masking signal and the pink noise signal are generated, delay adjustment needs to be separately performed on the masking signal and the pink noise signal, to adjust the masking signal and the pink noise signal to the same delay.

Step S303: Generate the first voice signal based on the masking signal and the pink noise signal that are adjusted to the same delay.

In a possible implementation, after the masking signal and the pink noise signal are adjusted to the same delay, summation may be performed on the masking signal and the pink noise signal that are adjusted to the same delay, and then a signal obtained after the summation is determined as the first voice signal.

In a possible implementation, after the masking signal and the pink noise signal are adjusted to the same delay, weighted summation may be further performed on the masking signal and the pink noise signal that are adjusted to the same delay, and then a signal obtained after the weighted summation is determined as the first voice signal. Weights respectively corresponding to the masking signal and the pink noise signal may be determined in advance by using a call test.

In a possible implementation, after the masking signal and the pink noise signal are adjusted to a same delay, gain adjustment may be further separately performed on the masking signal and the pink noise signal that are obtained after delay adjustment. A gain corresponding to the masking signal and a gain corresponding to the pink noise signal may be the same or different, which may be both determined based on a call test, then be preset in the electronic device, and may be invoked from the electronic device when gain adjustment is performed on the masking signal and the pink noise signal.

Then, summation or weighted summation is performed on the masking signal and the pink noise signal that are obtained after gain adjustment, and a signal obtained after the summation or the weighted summation is determined as the first voice signal. In this way, a proper masking signal and a proper pink noise signal may be better determined in advance based on a call test, so that the generated first voice signal can subsequently better mask the downlink voice signal. This prevents the another person in the ambient environment from clearly hearing the call content of the user while ensuring that the user clearly hears the call content. Therefore, user experience is better.

According to any one of the implementations shown in FIG. 6 to FIG. 17, the generated first voice signal can mask a signal of a frequency point with a relatively large power spectral density value in the downlink voice signal. After the first voice signal and the second voice signal are simultaneously output subsequently, intensity of a sound entering an ear of another person in the ambient environment of the user is weakened. In this case, the call content of the user cannot be clearly heard. Therefore, privacy of the user can be well protected, and user experience is better.

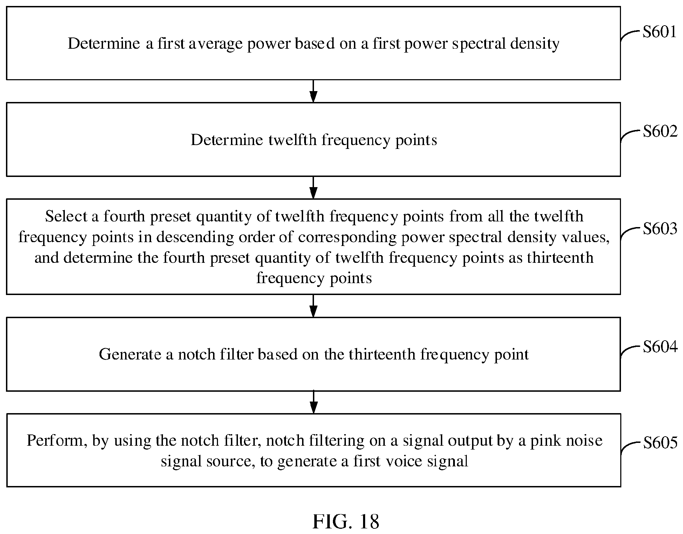

For example, as shown in FIG. 18, generating the first voice signal based on the first power spectral density may alternatively be implemented according to the following steps:
Step S601: Determine a first average power based on the first power spectral density.

The first average power refers to an average value of power spectral density values of all frequency points corresponding to the first power spectral density.

Step S602: Determine twelfth frequency points.

The twelfth frequency point is a frequency point whose corresponding power spectral density value is greater than the first average power and that is in all the frequency points corresponding to the first power spectral density.

Step S603: Select a fourth preset quantity of twelfth frequency points from all the twelfth frequency points in descending order of corresponding power spectral density values, and determine the fourth preset quantity of twelfth frequency points as thirteenth frequency points.

The fourth preset quantity may be set based on a requirement of an actual application scenario. For example, the fourth preset quantity may be set to 3 or 5.

Step S604: Generate a notch filter based on the thirteenth frequency point.

A notch frequency of the notch filter includes a frequency value of the thirteenth frequency point. That is, after being filtered by using the notch filter, a signal whose frequency is the frequency value of the thirteenth frequency point may be filtered out.

Step S605: Perform, by using the notch filter, notch filtering on a signal output by a pink noise signal source, to generate the first voice signal.

It should be noted that if the first power spectral density generated in step S201 is the power spectral density of the downlink voice signal, when step S605 is performed, the notch filter whose notch frequency includes the frequency value of the thirteenth frequency point is used to perform notch filtering on the signal output by the pink noise signal source, and a signal obtained after notch filtering is determined as the first voice signal.

If the first power spectral density generated in step S201 is the power spectral density of the first signal, when step S605 is performed, a bandwidth of the notch filter further needs to be set to a first bandwidth, then the notch filter whose bandwidth is the first bandwidth and whose notch frequency includes the frequency value of the thirteenth frequency point is used to perform notch filtering on the signal output by the pink noise signal source, and a signal obtained after notch filtering is determined as the first voice signal.

According to the implementation shown in FIG. 18, the generated first voice signal can mask most remaining signals in the downlink voice signal other than a signal of a frequency point with a relatively large power spectral density value. After the first voice signal and the second voice signal are simultaneously output subsequently, a sound entering an ear of another person in the ambient environment of the user lacks information about signals of most frequency points. In this case, the call content of the user cannot be clearly heard. This can also well protect privacy of the user, and user experience is better.

In some other optional embodiments, after calculating the first power spectral density, the electronic device may further determine whether a difference between the first average power and a maximum power spectral density value in all the power spectral density values included in the first power spectral density is greater than or equal to a preset power spectral density threshold. If the difference between the maximum power spectral density value and the first average power is greater than or equal to the preset power spectral density threshold, the first voice signal is generated according to the implementation shown in FIG. 18. Alternatively, if the difference between the maximum power spectral density value and the first average power is less than the preset power spectral density threshold, the first voice signal is generated according to any one of the implementations shown in FIG. 6 to FIG. 17. The preset power spectral density threshold may be set according to a requirement of an actual scenario.

In this way, after continuously obtaining downlink voice signals in real time, the electronic device may adjust, in real time based on an attribute of the downlink voice signal, an implementation of generating the first voice signal, so that a more proper interfering signal can be generated based on the attribute of the downlink voice signal in a more proper manner. This can prevent another person around the user from clearly hearing the call content of the user while ensuring that the user clearly hears the call content. Therefore, user experience is better.

In some other optional embodiments, generating the first voice signal based on the first power spectral density may alternatively be implemented in the following manner: The electronic device may alternatively separately generate a first voice signal (in this embodiment, the first voice signal may be subsequently denoted as a fourth voice signal) according to the implementation shown in FIG. 18, and generate a first voice signal (in this embodiment, the first voice signal may be subsequently denoted as a fifth voice signal) according to any one of the implementations shown in FIG. 6 to FIG. 17. Then, summation or weighted summation is performed on the fourth voice signal and the fifth voice signal, and a signal obtained after the summation or the weighted summation is determined as an interfering signal. Then, the interfering signal may be determined as the first voice signal in step S202.

It should be noted that in some other optional embodiments, on a basis of any one of the foregoing embodiments, before the first voice signal is generated based on the downlink voice signal, attribute information of the downlink voice signal may be first adjusted, for example, attribute information such as a signal-to-noise ratio and/or a gain of the downlink voice signal is adjusted. Then, the first voice signal is generated based on a downlink voice signal obtained after attribute information adjustment. This is not limited in this application.

Step S102: Generate a second voice signal.

The second voice signal is a voice signal that is obtained after delay processing is performed on the downlink voice signal and that has a same delay as the first voice signal.

It should be noted that in some optional embodiments, before delay processing is performed on the downlink voice signal, other attribute information of the downlink voice signal may be further first adjusted, for example, attribute information such as a signal-to-noise ratio and/or a gain of the downlink voice signal is adjusted. Then, delay processing is performed on a downlink voice signal obtained after attribute information adjustment, to obtain the voice signal having the same delay as the first voice signal. Finally, the obtained voice signal is determined as the second voice signal.

It should be further noted that when the first voice signal is generated, a manner of adjusting the attribute information of the downlink voice signal may be the same as or different from a manner of adjusting the attribute information of the downlink voice signal when the second voice signal is generated. This is not limited in this application.

Step S103: At a same output time, separately output the second voice signal by using the first sound production assembly, and output the first voice signal by using the second sound production assembly.

At the same output time, after the second voice signal is output by using the first sound production assembly and the first voice signal is output by using the second sound production assembly, both the first voice signal and the second voice signal are converted into sound signals and then sent. In this way, the first voice signal can mask the second voice signal, that is, an interfering signal of the downlink voice signal can mask the downlink voice signal.

Because the first sound production assembly is disposed at the first location of the electronic device, when the user makes a handheld call, the first location is close to the ear of the user, or even faces the ear of the user. The second sound production assembly is disposed at the second location far away from the ear of the user. In this way, when the user increases a volume, even if the first voice signal masks the second voice signal, intensity of a sound entering the ear of the user is still high enough, and the user can clearly hear the call content. For another person around the user, because both a sound produced by the first sound production assembly and a sound produced by the second sound production assembly are far away from an ear, when the first voice signal masks the second voice signal, intensity of a sound entering the ear is relatively low, and the call content of the user cannot be clearly heard, thereby achieving a purpose of protecting call privacy of the user. Therefore, user experience is relatively good.

In some optional embodiments, a third sound production assembly may be further disposed in the electronic device, and the third sound production assembly may be disposed at a third location close to the first location. For example, the first sound production assembly may be a sound production assembly of a ceramic-driven screen, the second sound production assembly may be a speaker disposed at the bottom of the electronic device, and the third sound production assembly may be a speaker disposed at the top of the electronic device. In this application scenario, the voice signal output method provided in this application may further include: generating a third voice signal, where the third voice signal is a voice signal that is obtained after delay processing is performed on the downlink voice signal and that has the same delay as the first voice signal; and outputting the third voice signal at the same output time as the first voice signal and the second voice signal by using the third sound production assembly. In this way, the sound produced by the first sound production assembly can be supplemented by using a sound produced by the third sound production assembly, so that a sound heard by the user is clearer, thereby improving user experience.

It can be learned that in the voice signal output method provided in this embodiment of this application, the downlink voice signal can be masked by using the interfering signal generated based on the downlink voice signal. When the user holds the electronic device for a call, the intensity of the sound entering the ear of the user is high enough. This can ensure that the user can clearly hear the call content. For the another person in the ambient environment, because of a masking function of the interfering signal on the downlink voice signal, intensity of a sound transmitted to an ear of the person is relatively low, and information is incomplete. In this case, the person cannot clearly hear the call content of the user, thereby well protecting privacy of the user. Therefore, user experience is better.

The method embodiments described in this specification may be independent solutions, or may be combined based on internal logic. These solutions all fa11 within the protection scope of this application.

The foregoing embodiments describe the voice signal output method provided in this application. The following describes an embodiment of an electronic device provided in this application. It may be understood that to implement the foregoing functions, the electronic device includes corresponding hardware structures and/or software modules for performing the functions. A person skilled in the art should be easily aware that the example units and algorithm steps described with reference to the embodiments disclosed in this specification can be implemented in this application in a form of hardware or a combination of hardware and computer software. Whether a specific function is performed by hardware or hardware driven by computer software depends on a particular application and a design constraint of the technical solutions. A person skilled in the art may use different methods to implement the described functions for each specific application, but it should not be considered that such an implementation goes beyond the scope of this application.

In the embodiments of this application, the electronic device may be divided into functional modules based on the foregoing method examples, for example, each functional module may be obtained through division for each corresponding function, or two or more functions may be integrated into one processing module. The integrated module may be implemented in a form of hardware, or may be implemented in a form of a software functional module. It should be noted that division of the modules in the embodiments of this application is an example, and is merely logical function division. During actual implementation, there may be another division manner.

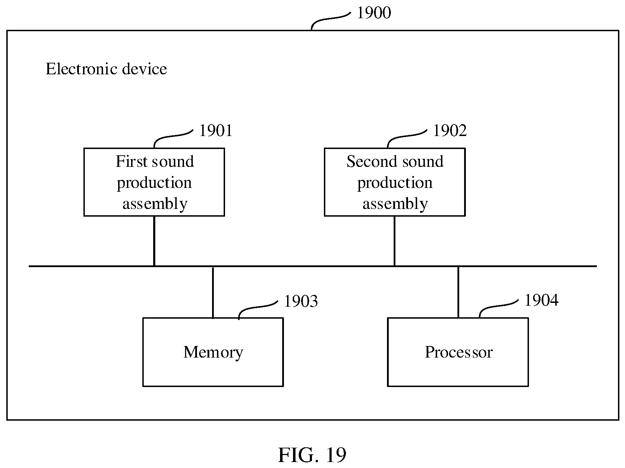

The method provided in embodiments of this application is described in detail above with reference to FIG. 3 to FIG. 18. The following describes in detail an electronic device provided in an embodiment of this application with reference to FIG. 19. It should be understood that description of an electronic device embodiment corresponds to the description of the method embodiments. Therefore, for content that is not described in detail, refer to the foregoing method embodiments. For brevity, details are not described herein again.

Reference is made to FIG. 19. FIG. 19 is a block diagram of a structure of an electronic device according to an embodiment of this application. As shown in FIG. 19, the electronic device 1900 includes a first sound production assembly 1901 and a second sound production assembly 1902. The first sound production assembly 1901 is disposed at a first location of the electronic device 1900, the first location is close to an ear of a user when the user holds the electronic device for a call, and the second sound production assembly 1902 is disposed at a second location different from the first location. The electronic device 1900 further includes a memory 1903 and a processor 1904, and the memory 1903 and the processor 1904 are coupled. The memory 1903 is configured to store computer program code, the computer program code includes computer instructions, and when the processor 1904 executes the computer instructions, the electronic device 1900 is enabled to perform the voice signal output method according to any one of the foregoing embodiments of FIG. 3 to FIG. 18. The electronic device 1900 may perform the operations in the foregoing method embodiments.

For example, in an optional embodiment of this application, the processor 1904 may be configured to: generate a first voice signal, where the first voice signal is an interfering signal generated based on a downlink voice signal; generate a second voice signal, where the second voice signal is a voice signal that is obtained after delay processing is performed on the downlink voice signal and that has a same delay as the first voice signal; and at a same output time, separately output the second voice signal by using the first sound production assembly, and output the first voice signal by using the second sound production assembly.

In a possible implementation, that the processor 1904 is configured to generate a first voice signal is specifically as follows: The processor 1904 is configured to generate a first power spectral density, where the first power spectral density is a power spectral density calculated based on the downlink voice signal; and generate the first voice signal based on the first power spectral density.

In a possible implementation, that the processor 1904 is configured to generate the first voice signal based on the first power spectral density is specifically as follows: The processor 1904 is configured to generate a masking signal and a pink noise signal based on the first power spectral density; adjust the masking signal and the pink noise signal to a same delay; and generate the first voice signal based on the masking signal and the pink noise signal that are adjusted to the same delay.

In a possible implementation, that the processor 1904 is configured to generate a masking signal based on the first power spectral density is specifically as follows: The processor 1904 is configured to determine a first average power based on the first power spectral density, where the first average power refers to an average value of power spectral density values of all frequency points corresponding to the first power spectral density; determine a first frequency point, where the first frequency point is a frequency point whose corresponding power spectral density value is greater than the first average power and that is in all the frequency points corresponding to the first power spectral density; and generate the masking signal based on the first frequency point.

In a possible implementation, that the processor 1904 is configured to generate the masking signal based on the first frequency point is specifically as follows: The processor 1904 is configured to: if there are a plurality of the first frequency points, and a frequency value difference between a first frequency point with a largest frequency value and a first frequency point with a smallest frequency value in all the first frequency points is less than a first preset frequency threshold, select a first preset quantity of first frequency points from all the first frequency points in descending order of corresponding power spectral density values, and determine the first preset quantity of first frequency points as second frequency points; determine a third frequency point, where the third frequency point is located between two adjacent second frequency points; determine an amplitude corresponding to the third frequency point based on a preset human ear masking effect curve, where the amplitude is used to represent strength of a signal; and generate the masking signal based on a frequency value of the third frequency point and the amplitude corresponding to the third frequency point.

In a possible implementation, that the processor 1904 is configured to generate the masking signal based on the first frequency point is specifically as follows: The processor 1904 is configured to: if there are a plurality of the first frequency points, and a frequency value difference between a first frequency point with a largest frequency value and a first frequency point with a smallest frequency value in all the first frequency points is greater than or equal to a first preset frequency threshold, select, from all the first frequency points, and determine, as fourth frequency points, a first frequency point with a largest corresponding power spectral density value, the first frequency point with the largest frequency value, and the first frequency point with the smallest frequency value; respectively select, and determine, as fifth frequency points, one frequency point near each of the fourth frequency points, between the fourth frequency points, and at a location whose frequency value difference is less than or equal to a second preset frequency threshold; determine an amplitude corresponding to the fifth frequency point based on a preset human ear masking effect curve, where the amplitude is used to represent strength of a signal; and generate the masking signal based on a frequency value of the fifth frequency point and the amplitude corresponding to the fifth frequency point.

In a possible implementation, that the processor 1904 is configured to generate the masking signal based on the first frequency point is specifically as follows: The processor 1904 is configured to: if there are a plurality of the first frequency points, and a frequency value difference between a first frequency point with a largest frequency value and a first frequency point with a smallest frequency value in all the first frequency points is greater than or equal to a first preset frequency threshold, select a second preset quantity of first frequency points in each frequency point interval in descending order of corresponding power spectral density values, and determine the second preset quantity of first frequency points as sixth frequency points, where a frequency value difference between an end frequency point and a start frequency point in each frequency point interval is less than or equal to a third preset frequency threshold, and a quantity of first frequency points included in each frequency point interval is greater than or equal to a third preset quantity; determine a seventh frequency point corresponding to each frequency point interval, where the seventh frequency point is located between two adjacent sixth frequency points in a corresponding frequency point interval; determine an amplitude corresponding to the seventh frequency point based on a preset human ear masking effect curve, where the amplitude is used to represent strength of a signal; and generate the masking signal based on a frequency value of the seventh frequency point and the amplitude corresponding to the seventh frequency point.

In a possible implementation, that the processor 1904 is configured to generate the masking signal based on the first frequency point is specifically as follows: The processor 1904 is configured to: if there is one first frequency point, separately select one frequency point on two sides of the first frequency point, and determine the frequency points as eighth frequency points; determine an amplitude corresponding to the eighth frequency point based on a preset human ear masking effect curve, where the amplitude is used to represent strength of a signal; and generate the masking signal based on a frequency value of the eighth frequency point and the amplitude corresponding to the eighth frequency point.

In a possible implementation, that the processor 1904 is configured to generate the masking signal based on the first frequency point is specifically as follows: The processor 1904 is configured to: if there is one first frequency point, separately select one frequency point on two sides of the first frequency point, and determine the frequency points as ninth frequency points; respectively select one frequency point between each of the ninth frequency points and the first frequency point, and determine the frequency point as a tenth frequency point; determine an amplitude corresponding to the tenth frequency point based on a preset human ear masking effect curve, where the amplitude is used to represent strength of a signal; and generate the masking signal based on a frequency value of the tenth frequency point and the amplitude corresponding to the tenth frequency point.

In a possible implementation, that the processor 1904 is configured to generate a pink noise signal based on the first power spectral density is specifically as follows: The processor 1904 is configured to determine a second average power, where the second average power refers to an average value of power spectral density values of all eleventh frequency points, the eleventh frequency point is a frequency point whose power spectral density value is less than or equal to a first average power and that is in all frequency points corresponding to the first power spectral density, and the first average power refers to an average value of power spectral density values of all the frequency points corresponding to the first power spectral density; obtain a preset pink-noise band-pass filtering gain corresponding to the second average power; adjust a gain of a first band-pass filter to the preset pink-noise band-pass filtering gain; and perform, by using the first band-pass filter obtained after gain adjustment, band-pass filtering on a signal output by a pink noise signal source, to generate the pink noise signal.

In a possible implementation, that the processor 1904 is configured to generate the first voice signal based on the first power spectral density is specifically as follows: The processor 1904 is configured to determine a first average power based on the first power spectral density, where the first average power refers to an average value of power spectral density values of all frequency points corresponding to the first power spectral density; determine twelfth frequency points, where the twelfth frequency point is a frequency point whose corresponding power spectral density value is greater than the first average power and that is in all the frequency points corresponding to the first power spectral density; select a fourth preset quantity of twelfth frequency points from all the twelfth frequency points in descending order of corresponding power spectral density values, and determine the fourth preset quantity of twelfth frequency points as thirteenth frequency points; generate a notch filter based on the thirteenth frequency point, where a notch frequency of the notch filter includes a frequency value of the thirteenth frequency point; and perform, by using the notch filter, notch filtering on a signal output by a pink noise signal source, to generate the first voice signal.

In a possible implementation, that the processor 1904 is configured to generate a first power spectral density is specifically as follows: The processor 1904 is configured to perform band-pass filtering on the downlink voice signal by using a second band-pass filter, to obtain a first signal in a first bandwidth range, where the first bandwidth is a bandwidth of the second band-pass filter; calculate a power spectral density of the first signal; and determine the power spectral density of the first signal as the first power spectral density.

In a possible implementation, the electronic device 1900 further includes a third sound production assembly, the third sound production assembly is disposed at a third location close to the first location, and the processor 1904 is further configured to generate a third voice signal, where the third voice signal is a voice signal that is obtained after delay processing is performed on the downlink voice signal and that has the same delay as the first voice signal; and output the third voice signal by using the third sound production assembly at the same output time.

In an implementation process, the steps of the foregoing method may be completed by a hardware-integrated logic circuit in the processor or instructions in a form of software. The steps of the method disclosed with reference to the embodiments of this application may be directly performed by a hardware processor, or by a combination of hardware in the processor and a software module. The software module may be located in a storage medium that is mature in the art, for example, a random access memory, a flash memory, a read-only memory, a programmable read-only memory, an electrically erasable programmable memory, or a register. The storage medium is located in the memory, and the processor reads information in the memory and completes the steps of the foregoing method in combination with hardware in the processor. To avoid repetition, details are not described herein again.

It should be noted that the processor in this embodiment of this application may be an integrated circuit chip, and has a signal processing capability. In an implementation process, the steps of the foregoing method embodiments may be completed by a hardware-integrated logic circuit in the processor or instructions in a form of software. The foregoing processor may be a general-purpose processor, a digital signal processor (DSP), an application-specific integrated circuit (ASIC), a field programmable gate array (FPGA), another programmable logic device, a discrete gate, a transistor logic device, or a discrete hardware component. The methods, steps, and logical block diagrams disclosed in the embodiments of this application may be implemented or performed. The general-purpose processor may be a microprocessor, or the processor may be any conventional processor or the like. The steps of the method disclosed with reference to the embodiments of this application may be directly performed by a hardware decoding processor, or performed by a combination of hardware in a decoding processor and a software module. The software module may be located in a storage medium that is mature in the art, for example, a random access memory, a flash memory, a read-only memory, a programmable read-only memory, an electrically erasable programmable memory, or a register. The storage medium is located in the memory, and the processor reads information in the memory and completes the steps of the foregoing method in combination with hardware in the processor.

It may be understood that the memory in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. Through example descriptions but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memories used for the system and the method described in this specification are intended to include, but are not limited to, these and any other proper types of memories.

According to the method provided in the embodiments of this application, an embodiment of this application further provides a computer program product. The computer program product includes a computer program or instructions. When the computer program or the instructions are run on a computer, the computer is enabled to perform the method according to any one of the method embodiments.

According to the method provided in the embodiments of this application, an embodiment of this application further provides a computer storage medium. The computer storage medium stores a computer program or instructions. When the computer program or the instructions are run on a computer, the computer is enabled to perform the method according to any one of the method embodiments.

A person of ordinary skill in the art may be aware that, various illustrative logical blocks (illustrative logical block) and steps (step) described with reference to the embodiments disclosed in this specification can be implemented by electronic hardware or a combination of computer software and electronic hardware. Whether these functions are performed by hardware or software depends on specific applications and design constraints of the technical solutions. A person skilled in the art may use different methods to implement the described functions for each specific application, but it should not be considered that such an implementation goes beyond the scope of this application.

A person skilled in the art may clearly understand that for ease and brevity of description, for a specific operation process of the electronic device and module described above, refer to a corresponding process in the foregoing method embodiments. Details are not described herein again.

In the embodiments provided in this application, it should be understood that the disclosed apparatus and method may be implemented in another manner. For example, the electronic device embodiment described above is merely an example. For example, division into the modules is merely logical function division. In an actual implementation, there may be another division manner. For example, a plurality of modules or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The modules described as separate parts may or may not be physically separate, and parts displayed as modules may or may not be physical units, may be located at one position, or may be distributed on a plurality of network units. Some or all of the units may be selected based on actual requirements to achieve the objectives of the solutions in the embodiments.

In addition, functional modules in the embodiments of this application may be integrated into one processing unit, or each module may exist alone physically, or two or more modules are integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be embodied in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The electronic device, the computer storage medium, and the computer program product provided in the embodiments of this application are all configured to perform the method provided above. Therefore, for beneficial effects that can be achieved by the electronic device, the computer storage medium, and the computer program product provided in the embodiments of this application, refer to the beneficial effects corresponding to the method provided above. Details are not described herein again.

It should be understood that in the embodiments of this application, an execution order of the steps should be determined based on functions and internal logic of the steps. Sequence numbers of the steps do not mean an execution order, and should not constitute a limitation on the implementation processes of the embodiments.

The parts of this specification are all described in a progressive manner, and for same or similar parts in the embodiments, reference may be made to each other. Descriptions of each embodiment focus on a difference from other embodiments. In particular, embodiments of the electronic device, the computer storage medium, and the computer program product are basically similar to the method embodiments, and therefore are described relatively briefly. For related parts, refer to descriptions in the method embodiments.

The matter for which protection is sought is uniquely defined by the appended independent claims 1, 12, 13.

## Claims

1. A voice signal output method, wherein the method is applied to an electronic device (100, 1900), the electronic device (100, 1900) comprises a first sound production assembly (401, 1901) and a second sound production assembly (402, 1902), the first sound production assembly (401, 1901) is a sound production assembly of a ceramic-driven screen and is disposed at a first location of the electronic device (100, 1900), the first location is located on the screen (194) and close to an ear of a user when the user holds the electronic device (100, 1900) for a call, the second sound production assembly (402, 1902) is disposed at a second location different from the first location, and the method comprises:
generating (S101) a first voice signal, wherein the first voice signal is an interfering signal generated based on a downlink voice signal, wherein the generating a first voice signal comprises:
generating (S202) a first power spectral density, wherein the first power spectral density is a power spectral density calculated based on the downlink voice signal;
generating (S301) a masking signal and a pink noise signal based on the first power spectral density;
adjusting (S302) the masking signal and the pink noise signal to a same delay; and
generating (S303) the first voice signal based on the masking signal and the pink noise signal that are adjusted to the same delay;
generating (S102) a second voice signal, wherein the second voice signal is a voice signal that is obtained by performing delay processing on the downlink voice signal such that it has a same delay as the first voice signal; and
at a same output time, separately outputting (S103) the second voice signal by using the first sound production assembly (401, 1901), and outputting the first voice signal by using the second sound production assembly (402, 1902).

2. The method according to claim 1, wherein the generating (S301) a masking signal based on the first power spectral density comprises:
determining (S401) a first average power based on the first power spectral density, wherein the first average power refers to an average value of power spectral density values of all frequency points corresponding to the first power spectral density;
determining (S402) a first frequency point, wherein the first frequency point is a frequency point whose corresponding power spectral density value is greater than the first average power and that is in all the frequency points corresponding to the first power spectral density; and
generating (S403) the masking signal based on the first frequency point.

3. The method according to claim 2, wherein the generating (S403) the masking signal based on the first frequency point comprises:
if there are a plurality of the first frequency points, and a frequency value difference between a first frequency point with a largest frequency value and a first frequency point with a smallest frequency value in all the first frequency points is less than a first preset frequency threshold, selecting a first preset quantity of first frequency points from all the first frequency points in descending order of corresponding power spectral density values, and determining the first preset quantity of first frequency points as second frequency points;
determining a third frequency point, wherein the third frequency point is located between two adjacent second frequency points;
determining an amplitude corresponding to the third frequency point based on a preset human ear masking effect curve, wherein the amplitude is used to represent strength of a signal; and
generating the masking signal based on a frequency value of the third frequency point and the amplitude corresponding to the third frequency point.

4. The method according to claim 2, wherein the generating the masking signal based on the first frequency point comprises:
if there are a plurality of the first frequency points, and a frequency value difference between a first frequency point with a largest frequency value and a first frequency point with a smallest frequency value in all the first frequency points is greater than or equal to a first preset frequency threshold, selecting, from all the first frequency points, and determining, as fourth frequency points, a first frequency point with a largest corresponding power spectral density value, the first frequency point with the largest frequency value, and the first frequency point with the smallest frequency value;
respectively selecting, and determining, as fifth frequency points, one frequency point near each of the fourth frequency points, between the fourth frequency points, and at a location whose frequency value difference is less than or equal to a second preset frequency threshold;
determining an amplitude corresponding to the fifth frequency point based on a preset human ear masking effect curve, wherein the amplitude is used to represent strength of a signal; and
generating the masking signal based on a frequency value of the fifth frequency point and the amplitude corresponding to the fifth frequency point.

5. The method according to claim 2, wherein the generating the masking signal based on the first frequency point comprises:
if there are a plurality of the first frequency points, and a frequency value difference between a first frequency point with a largest frequency value and a first frequency point with a smallest frequency value in all the first frequency points is greater than or equal to a first preset frequency threshold, selecting a second preset quantity of first frequency points in each frequency point interval in descending order of corresponding power spectral density values, and determining the second preset quantity of first frequency points as sixth frequency points, wherein a frequency value difference between an end frequency point and a start frequency point in each frequency point interval is less than or equal to a third preset frequency threshold, and a quantity of first frequency points comprised in each frequency point interval is greater than or equal to a third preset quantity;
determining a seventh frequency point corresponding to each frequency point interval, wherein the seventh frequency point is located between two adjacent sixth frequency points in a corresponding frequency point interval;
determining an amplitude corresponding to the seventh frequency point based on a preset human ear masking effect curve, wherein the amplitude is used to represent strength of a signal; and
generating the masking signal based on a frequency value of the seventh frequency point and the amplitude corresponding to the seventh frequency point.

6. The method according to claim 2, wherein the generating the masking signal based on the first frequency point comprises:
if there is one first frequency point, separately selecting one frequency point on two sides of the first frequency point, and determining the frequency points as eighth frequency points;
determining an amplitude corresponding to the eighth frequency point based on a preset human ear masking effect curve, wherein the amplitude is used to represent strength of a signal; and
generating the masking signal based on a frequency value of the eighth frequency point and the amplitude corresponding to the eighth frequency point.

7. The method according to claim 2, wherein the generating the masking signal based on the first frequency point comprises:
if there is one first frequency point, separately selecting one frequency point on two sides of the first frequency point, and determining the frequency points as ninth frequency points;
respectively selecting one frequency point between each of the ninth frequency points and the first frequency point, and determining the frequency point as a tenth frequency point;
determining an amplitude corresponding to the tenth frequency point based on a preset human ear masking effect curve, wherein the amplitude is used to represent strength of a signal; and
generating the masking signal based on a frequency value of the tenth frequency point and the amplitude corresponding to the tenth frequency point.

8. The method according to claim 1, wherein the generating (S301) a pink noise signal based on the first power spectral density comprises:
determining (S501) a second average power, wherein the second average power refers to an average value of power spectral density values of all eleventh frequency points, the eleventh frequency point is a frequency point whose power spectral density value is less than or equal to a first average power and that is in all frequency points corresponding to the first power spectral density, and the first average power refers to an average value of power spectral density values of all the frequency points corresponding to the first power spectral density;
obtaining (S502) a preset pink-noise band-pass filtering gain corresponding to the second average power;
adjusting (S503) a gain of a first band-pass filter to the preset pink-noise band-pass filtering gain; and
performing (S504), by using the first band-pass filter obtained after gain adjustment, band-pass filtering on a signal output by a pink noise signal source, to generate the pink noise signal.

9. The method according to claim 2, wherein the generating (S301) the first voice signal based on the first power spectral density comprises:
determining (S601) a first average power based on the first power spectral density, wherein the first average power refers to an average value of power spectral density values of all frequency points corresponding to the first power spectral density;
determining (S602) twelfth frequency points, wherein the twelfth frequency point is a frequency point whose corresponding power spectral density value is greater than the first average power and that is in all the frequency points corresponding to the first power spectral density;
selecting (S603) a fourth preset quantity of twelfth frequency points from all the twelfth frequency points in descending order of corresponding power spectral density values, and determining the fourth preset quantity of twelfth frequency points as thirteenth frequency points;
generating (S604) a notch filter based on the thirteenth frequency point, wherein a notch frequency of the notch filter comprises a frequency value of the thirteenth frequency point; and
performing (S605), by using the notch filter, notch filtering on a signal output by a pink noise signal source, to generate the first voice signal.

10. The method according to claim 2, wherein the generating (S202) a first power spectral density comprises:
performing band-pass filtering on the downlink voice signal by using a second band-pass filter, to obtain a first signal in a first bandwidth range, wherein a first bandwidth is a bandwidth of the second band-pass filter;
calculating a power spectral density of the first signal; and
determining the power spectral density of the first signal as the first power spectral density.

11. The method according to any one of claims 1 to 10, wherein the electronic device (100, 1900) further comprises a third sound production assembly, the third sound production assembly is disposed at a third location close to the first location, and the method further comprises:
generating a third voice signal, wherein the third voice signal is a voice signal that is obtained after delay processing is performed on the downlink voice signal and that has the same delay as the first voice signal; and
outputting the third voice signal by using the third sound production assembly at the same output time.

12. An electronic device (100, 1900), wherein the electronic device (100, 1900) comprises a first sound production assembly (401, 1901) and a second sound production assembly (402, 1902), the first sound production assembly (401, 1901) is a sound production assembly of a ceramic-driven screen and is disposed at a first location of the electronic device (100, 1900), the first location is located on the screen (194) and close to an ear of a user when the user holds the electronic device (100, 1900) for a call, the second sound production assembly (402, 1902) is disposed at a second location different from the first location, the electronic device (100, 1900) further comprises a memory (121, 1903) and a processor (110, 1904), and the memory (121, 1903) and the processor (110, 1904) are coupled; and the memory (121, 1903) is configured to store computer program code, the computer program code comprises computer instructions, and when the processor (110, 1904) executes the computer instructions, the electronic device (100, 1900) is enabled to perform the method according to any one of claims 1-11.

13. A computer storage medium, wherein the computer storage medium stores a computer program or instructions, and when the computer program or the instructions are executed on a processor (110, 1904) of an electronic device (100, 1900) comprising a first sound production assembly (401, 1901) and a second sound production assembly (402, 1902), wherein the first sound production assembly (401, 1901) is a sound production assembly of a ceramic-driven screen and is disposed at a first location of the electronic device (100, 1900), the first location is located on the screen (194) and close to an ear of a user when the user holds the electronic device (100, 1900) for a call, the second sound production assembly (402, 1902) is disposed at a second location different from the first location, the electronic device (100, 1900) further comprises a memory (121, 1903) and the processor (110, 1904), and the memory (121, 1903) and the processor (110, 1904) are coupled, the electronic device (100, 1900) is enabled to perform the method according to any one of claims 1-11.

## Patentansprüche

1. Ein Verfahren zur Ausgabe von Sprachsignalen, wobei das Verfahren auf ein elektronisches Gerät (100, 1900) angewendet wird, das elektronische Gerät (100, 1900) umfasst eine erste Tonerzeugungsanordnung (401, 1901) und eine zweite Tonerzeugungsanordnung (402, 1902), die erste Tonerzeugungsanordnung (401, 1901) ist eine Tonerzeugungsanordnung eines keramisch angetriebenen Bildschirms und befindet sich an einer ersten Position des elektronischen Geräts (100, 1900), wobei die erste Position sich auf dem Bildschirm (194) befindet und sich in der Nähe eines Ohrs des Benutzers befindet, wenn der Benutzer das elektronische Gerät (100, 1900) zu einem Anruf hält. Die zweite Tonerzeugungsanordnung (402, 1902) befindet sich an einer zweiten, von der ersten abweichenden Position, und das Verfahren umfasst folgende Schritte:
Erzeugen (S101) eines ersten Sprachsignals, wobei das erste Sprachsignal ein auf Grundlage eines Downlink-Sprachsignals erzeugtes Störsignal ist, wobei das Erzeugen eines ersten Sprachsignals umfasst:
Erzeugen (S202) einer ersten Leistungsverteilungsdichte, wobei die erste Leistungsverteilungsdichte eine auf Grundlage des Downlink-Sprachsignals berechnete Leistungsverteilungsdichte ist;
Erzeugen (S301) eines Maskierungssignals und eines Rosa-Rauschsignals auf Grundlage der ersten Leistungsverteilungsdichte;
Anpassen (S302) des Maskierungssignals und des Rosa-Rauschsignals auf die gleiche Verzögerung; und
Erzeugen (S303) des ersten Sprachsignals auf Grundlage des Maskierungssignals und des Rosa-Rauschsignals, die auf die gleiche Verzögerung angepasst wurden;
Erzeugen (S102) eines zweiten Sprachsignals, wobei das zweite Sprachsignal ein Sprachsignal ist, das durch Verzögerungsverarbeitung des Downlink-Sprachsignals so erhalten wird, dass es die gleiche Verzögerung wie das erste Sprachsignal aufweist; und
zu demselben Ausgabemoment wird das zweite Sprachsignal separat über die erste Tonerzeugungsanordnung (401, 1901) ausgegeben und das erste Sprachsignal über die zweite Tonerzeugungsanordnung (402, 1902) ausgegeben.

2. Das Verfahren nach Anspruch 1, wobei das Erzeugen (S301) eines Maskierungssignals auf Grundlage der ersten Leistungsverteilungsdichte Folgendes umfasst:
Bestimmen (S401) einer ersten Durchschnittsleistung auf Grundlage der ersten Leistungsverteilungsdichte, wobei die erste Durchschnittsleistung den Mittelwert der Werte der Leistungsverteilungsdichte aller Frequenzpunkte, die der ersten Leistungsverteilungsdichte entsprechen, bezeichnet;
Bestimmen (S402) eines ersten Frequenzpunkts, wobei der erste Frequenzpunkt ein Frequenzpunkt ist, dessen entsprechende Leistungsverteilungsdichte größer als die erste Durchschnittsleistung ist und der sich unter allen Frequenzpunkten der ersten Leistungsverteilungsdichte befindet; und
Erzeugen (S403) des Maskierungssignals auf Grundlage des ersten Frequenzpunkts.

3. Verfahren nach Anspruch 2, wobei das Erzeugen (S403) des Maskierungssignals basierend auf dem ersten Frequenzpunkt Folgendes umfasst:
Wenn mehrere erste Frequenzpunkte vorhanden sind und der Unterschied zwischen dem Frequenzwert des ersten Frequenzpunkts mit dem größten Frequenzwert und dem ersten Frequenzpunkt mit dem kleinsten Frequenzwert unter allen ersten Frequenzpunkten kleiner als ein erster voreingestellter Frequenzschwellenwert ist, werden eine erste voreingestellte Anzahl von ersten Frequenzpunkten aus allen ersten Frequenzpunkten in absteigender Reihenfolge der entsprechenden Leistungsdichtwerte ausgewählt und diese erste voreingestellte Anzahl von ersten Frequenzpunkten als zweite Frequenzpunkte bestimmt;
Bestimmen eines dritten Frequenzpunkts, wobei sich der dritte Frequenzpunkt zwischen zwei benachbarten zweiten Frequenzpunkten befindet;
Bestimmen einer Amplitude, die dem dritten Frequenzpunkt anhand einer voreingestellten Maskierungskurve für das menschliche Ohr entspricht, wobei die Amplitude zur Darstellung der Stärke eines Signals verwendet wird; und
Erzeugen des Maskierungssignals basierend auf dem Frequenzwert des dritten Frequenzpunkts und der Amplitude, die dem dritten Frequenzpunkt entspricht.

4. Verfahren nach Anspruch 2, wobei das Erzeugen des Maskierungssignals basierend auf dem ersten Frequenzpunkt Folgendes umfasst:
Wenn mehrere erste Frequenzpunkte vorhanden sind und der Unterschied zwischen dem Frequenzwert des ersten Frequenzpunkts mit dem größten Frequenzwert und dem ersten Frequenzpunkt mit dem kleinsten Frequenzwert unter allen ersten Frequenzpunkten größer oder gleich einem ersten voreingestellten Frequenzschwellenwert ist, werden aus allen ersten Frequenzpunkten der erste Frequenzpunkt mit dem größten entsprechenden Leistungsdichtewert, der erste Frequenzpunkt mit dem größten Frequenzwert und der erste Frequenzpunkt mit dem kleinsten Frequenzwert ausgewählt und als vierte Frequenzpunkte bestimmt;
Jeweils Auswahl und Bestimmung als fünfte Frequenzpunkte eines Frequenzpunkts in der Nähe jedes der vierten Frequenzpunkte, zwischen den vierten Frequenzpunkten und an einer Stelle, deren Frequenzwertunterschied kleiner oder gleich einem zweiten voreingestellten Frequenzschwellenwert ist;
Bestimmen einer Amplitude, die dem fünften Frequenzpunkt anhand einer voreingestellten Maskierungskurve für das menschliche Ohr entspricht, wobei die Amplitude zur Darstellung der Stärke eines Signals verwendet wird; und
Erzeugen des Maskierungssignals basierend auf dem Frequenzwert des fünften Frequenzpunkts und der Amplitude, die dem fünften Frequenzpunkt entspricht.

5. Verfahren nach Anspruch 2, wobei das Erzeugen des Maskierungssignals basierend auf dem ersten Frequenzpunkt Folgendes umfasst:
Wenn mehrere erste Frequenzpunkte vorhanden sind und der Unterschied zwischen dem höchsten und dem niedrigsten Frequenzwert aller ersten Frequenzpunkte größer oder gleich einem ersten voreingestellten Frequenzschwellenwert ist, wird in jedem Frequenzpunktintervall eine zweite voreingestellte Anzahl von ersten Frequenzpunkten entsprechend der absteigenden Reihenfolge der zugehörigen Leistungsdichtwerte ausgewählt und diese zweite voreingestellte Anzahl von ersten Frequenzpunkten als sechste Frequenzpunkte festgelegt, wobei der Unterschied zwischen dem Endfrequenzpunkt und dem Anfangsfrequenzpunkt innerhalb jedes Frequenzpunktintervalls kleiner oder gleich einem dritten voreingestellten Frequenzschwellenwert ist und die Anzahl der im jeweiligen Frequenzpunktintervall enthaltenen ersten Frequenzpunkte größer oder gleich einer dritten voreingestellten Menge ist;
Bestimmen eines siebten Frequenzpunkts, der jedem Frequenzpunktintervall zugeordnet ist, wobei der siebte Frequenzpunkt zwischen zwei benachbarten sechsten Frequenzpunkten im entsprechenden Frequenzpunktintervall liegt;
Bestimmen einer Amplitude, die dem siebten Frequenzpunkt anhand einer voreingestellten Kurve des Verdeckungseffekts des menschlichen Gehörs entspricht, wobei die Amplitude zur Darstellung der Signalstärke dient; und
Erzeugen des Maskierungssignals basierend auf dem Frequenzwert des siebten Frequenzpunkts und der entsprechenden Amplitude.

6. Verfahren gemäß Anspruch 2, wobei das Erzeugen des Maskierungssignals basierend auf dem ersten Frequenzpunkt Folgendes umfasst:
Wenn ein erster Frequenzpunkt vorhanden ist, werden jeweils ein Frequenzpunkt auf beiden Seiten des ersten Frequenzpunkts ausgewählt und diese Frequenzpunkte als achte Frequenzpunkte festgelegt;
Bestimmen einer Amplitude, die dem achten Frequenzpunkt anhand einer voreingestellten Kurve des Verdeckungseffekts des menschlichen Gehörs entspricht, wobei die Amplitude zur Darstellung der Signalstärke dient; und
Erzeugen des Maskierungssignals basierend auf dem Frequenzwert des achten Frequenzpunkts und der entsprechenden Amplitude.

7. Verfahren gemäß Anspruch 2, wobei das Erzeugen des Maskierungssignals basierend auf dem ersten Frequenzpunkt Folgendes umfasst:
Wenn ein erster Frequenzpunkt vorhanden ist, werden jeweils ein Frequenzpunkt auf beiden Seiten des ersten Frequenzpunkts ausgewählt und diese Frequenzpunkte als neunte Frequenzpunkte festgelegt;
Jeweils ein Frequenzpunkt zwischen jedem der neunten Frequenzpunkte und dem ersten Frequenzpunkt wird separat ausgewählt und als zehnter Frequenzpunkt festgelegt;
Bestimmen einer Amplitude, die dem zehnten Frequenzpunkt auf Basis einer voreingestellten Kurve des Maskierungseffekts des menschlichen Ohres entspricht, wobei die Amplitude die Stärke eines Signals repräsentiert; und
Erzeugen des Maskierungssignals basierend auf einem Frequenzwert des zehnten Frequenzpunkts und der dazugehörigen Amplitude.

8. Verfahren nach Anspruch 1, wobei das Erzeugen (S301) eines Rosa-Rausch-Signals basierend auf der ersten Leistungsdichtespektrum umfasst:
Bestimmen (S501) einer zweiten durchschnittlichen Leistung, wobei die zweite durchschnittliche Leistung einen Durchschnittswert der Leistungsdichtespektrumswerte aller elften Frequenzpunkte bezeichnet. Der elfte Frequenzpunkt ist ein Frequenzpunkt, dessen Leistungsdichtespektrumswert kleiner oder gleich der ersten durchschnittlichen Leistung ist und der sich unter allen Frequenzpunkten befindet, die dem ersten Leistungsdichtespektrum entsprechen. Die erste durchschnittliche Leistung bezeichnet einen Durchschnitt der Leistungsdichtespektrumswerte aller Frequenzpunkte, die dem ersten Leistungsdichtespektrum entsprechen;
Ermitteln (S502) eines voreingestellten Gain-Werts für die Rosa-Rausch-Bandpassfilterung, der der zweiten durchschnittlichen Leistung entspricht;
Anpassen (S503) des Gain-Werts eines ersten Bandpassfilters auf den voreingestellten Gain-Wert für die Rosa-Rausch-Bandpassfilterung; und
Durchführen (S504) der Bandpassfilterung mit dem nach der Gain-Anpassung erhaltenen ersten Bandpassfilter auf ein vom Rosa-Rausch-Signalquelle ausgegebenes Signal, um das Rosa-Rausch-Signal zu erzeugen.

9. Verfahren nach Anspruch 2, wobei das Erzeugen (S301) des ersten Sprachsignals basierend auf dem ersten Leistungsdichtespektrum umfasst:
Bestimmen (S601) einer ersten durchschnittlichen Leistung basierend auf dem ersten Leistungsdichtespektrum, wobei die erste durchschnittliche Leistung einen Durchschnittswert der Leistungsdichtespektrumswerte aller Frequenzpunkte bezeichnet, die dem ersten Leistungsdichtespektrum entsprechen;
Bestimmen (S602) der zwölften Frequenzpunkte, wobei ein zwölfter Frequenzpunkt ein Frequenzpunkt ist, dessen zugehöriger Leistungsdichtespektrumswert größer als die erste durchschnittliche Leistung ist und der sich unter allen Frequenzpunkten befindet, die dem ersten Leistungsdichtespektrum entsprechen;
Auswählen (S603) einer vierten vorgegebenen Menge von zwölften Frequenzpunkten aus allen zwölften Frequenzpunkten in absteigender Reihenfolge der entsprechenden Leistungsdichtespektrumswerte und Bestimmen der vierten vorgegebenen Menge von zwölften Frequenzpunkten als dreizehnte Frequenzpunkte;
Erzeugen (S604) eines Notch-Filters basierend auf dem dreizehnten Frequenzpunkt, wobei eine Notch-Frequenz des Notch-Filters einen Frequenzwert des dreizehnten Frequenzpunkts umfasst; und
Durchführen (S605), indem der Notch-Filter verwendet wird, wird eine Notch-Filterung auf ein vom Pink Noise Signalquelle ausgegebenes Signal angewendet, um das erste Sprachsignal zu erzeugen.

10. Das Verfahren gemäß Anspruch 2, wobei das Erzeugen (S202) einer ersten Leistungsdichtespektrum umfasst:
Bandpassfilterung des Downlink-Sprachsignals mit einem zweiten Bandpassfilter durchführen, um ein erstes Signal in einem ersten Bandbreitenbereich zu erhalten, wobei die erste Bandbreite die Bandbreite des zweiten Bandpassfilters ist;
Berechnung der Leistungsdichtespektrum des ersten Signals; und
Bestimmen der Leistungsdichtespektrum des ersten Signals als das erste Leistungsdichtespektrum.

11. Das Verfahren gemäß einem der Ansprüche 1 bis 10, wobei die elektronische Vorrichtung (100, 1900) ferner eine dritte Tonerzeugungseinheit umfasst, wobei die dritte Tonerzeugungseinheit an einem dritten Ort nahe dem ersten Ort angeordnet ist, und das Verfahren ferner umfasst:
Erzeugen eines dritten Sprachsignals, wobei das dritte Sprachsignal ein Sprachsignal ist, das nach einer Verzögerungsverarbeitung des Downlink-Sprachsignals erhalten wird und dieselbe Verzögerung wie das erste Sprachsignal aufweist; und
Ausgabe des dritten Sprachsignals mit der dritten Tonerzeugungseinheit zur gleichen Ausgabzeit.

12. Eine elektronische Vorrichtung (100, 1900), wobei die elektronische Vorrichtung (100, 1900) eine erste Tonerzeugungseinheit (401, 1901) und eine zweite Tonerzeugungseinheit (402, 1902) umfasst, wobei die erste Tonerzeugungseinheit (401, 1901) eine Tonerzeugungseinheit eines keramik-betriebenen Bildschirms ist und sich an einem ersten Ort der elektronischen Vorrichtung (100, 1900) befindet; der erste Ort befindet sich auf dem Bildschirm (194) und nahe am Ohr des Benutzers, wenn der Benutzer die elektronische Vorrichtung (100, 1900) für einen Anruf hält; die zweite Tonerzeugungseinheit (402, 1902) befindet sich an einem zweiten, vom ersten unterschiedlichen Ort; weiterhin umfasst die elektronische Vorrichtung (100, 1900) einen Speicher (121, 1903) und einen Prozessor (110, 1904), wobei der Speicher (121, 1903) und der Prozessor (110, 1904) gekoppelt sind; und der Speicher (121, 1903) ist dafür konfiguriert, Computerprogrammcode zu speichern, wobei der Computerprogrammcode Computeranweisungen enthält, und wenn der Prozessor (110, 1904) die Computeranweisungen ausführt, ist die elektronische Vorrichtung (100, 1900) dazu befähigt, das Verfahren gemäß einem der Ansprüche 1-11 auszuführen.

13. Ein Computerspeichermedium, wobei das Computerspeichermedium ein Computerprogramm oder Anweisungen speichert und wenn das Computerprogramm oder die Anweisungen auf einem Prozessor (110, 1904) eines elektronischen Geräts (100, 1900) ausgeführt werden, das eine erste Tonerzeugungseinheit (401, 1901) und eine zweite Tonerzeugungseinheit (402, 1902) umfasst, wobei die erste Tonerzeugungseinheit (401, 1901) eine Tonerzeugungseinheit eines keramisch angetriebenen Bildschirms ist und an einer ersten Position des elektronischen Geräts (100, 1900) angebracht ist, wobei sich die erste Position auf dem Bildschirm (194) befindet und nahe am Ohr eines Benutzers ist, wenn der Benutzer das elektronische Gerät (100, 1900) für ein Telefongespräch hält, wobei die zweite Tonerzeugungseinheit (402, 1902) an einer zweiten, von der ersten unterschiedlichen Position angebracht ist, wobei das elektronische Gerät (100, 1900) weiterhin einen Speicher (121, 1903) und den Prozessor (110, 1904) umfasst und der Speicher (121, 1903) sowie der Prozessor (110, 1904) gekoppelt sind, wodurch das elektronische Gerät (100, 1900) in der Lage ist, das Verfahren gemäß einem der Ansprüche 1-11 auszuführen.

## Revendications

1. Procédé de sortie de signal vocal, ledit procédé étant appliqué à un dispositif électronique (100, 1900), le dispositif électronique (100, 1900) comprenant un premier ensemble de production sonore (401, 1901) et un second ensemble de production sonore (402, 1902), le premier ensemble de production sonore (401, 1901) étant un ensemble de production sonore à écran actionné par céramique et disposé à un premier emplacement du dispositif électronique (100, 1900), le premier emplacement étant situé sur l'écran (194) et proche de l'oreille de l'utilisateur lorsque celui-ci tient le dispositif électronique (100, 1900) pour un appel, le second ensemble de production sonore (402, 1902) étant disposé à un second emplacement différent du premier emplacement, et le procédé comprenant :
générer (S101) un premier signal vocal, le premier signal vocal étant un signal d'interférence généré sur la base d'un signal vocal en liaison descendante, la génération d'un premier signal vocal comprenant :
générer (S202) une première densité spectrale de puissance, la première densité spectrale de puissance étant calculée sur la base du signal vocal en liaison descendante ;
générer (S301) un signal masquant et un signal de bruit rose sur la base de la première densité spectrale de puissance ;
ajuster (S302) le signal masquant et le signal de bruit rose à un même délai ; et
générer (S303) le premier signal vocal sur la base du signal masquant et du signal de bruit rose qui ont été ajustés au même délai ;
générer (S102) un second signal vocal, le second signal vocal étant un signal vocal obtenu par traitement de délai sur le signal vocal en liaison descendante de sorte qu'il ait le même délai que le premier signal vocal ; et
au même instant de sortie, sortir séparément (S103) le second signal vocal à l'aide du premier ensemble de production sonore (401, 1901), et sortir le premier signal vocal à l'aide du second ensemble de production sonore (402, 1902).

2. Le procédé selon la revendication 1, dans lequel la génération (S301) du signal masquant sur la base de la première densité spectrale de puissance comprend :
déterminer (S401) une première puissance moyenne sur la base de la première densité spectrale de puissance, la première puissance moyenne désignant la valeur moyenne des densités spectrales de puissance de tous les points de fréquence correspondant à la première densité spectrale de puissance ;
déterminer (S402) un premier point de fréquence, le premier point de fréquence étant un point de fréquence dont la valeur de densité spectrale de puissance correspondante est supérieure à la première puissance moyenne et qui se trouve parmi tous les points de fréquence correspondant à la première densité spectrale de puissance ; et
générer (S403) le signal masquant sur la base du premier point de fréquence.

3. Le procédé selon la revendication 2, dans lequel la génération (S403) du signal de masquage sur la base du premier point de fréquence comprend :
s'il existe une pluralité de premiers points de fréquence, et qu'une différence de valeur de fréquence entre un premier point de fréquence ayant la plus grande valeur de fréquence et un premier point de fréquence ayant la plus petite valeur de fréquence parmi tous les premiers points de fréquence est inférieure à un premier seuil de fréquence prédéfini, sélectionner une quantité prédéfinie de premiers points de fréquence parmi tous les premiers points de fréquence en ordre décroissant de valeurs de densité spectrale de puissance correspondantes, et déterminer la quantité prédéfinie de premiers points de fréquence comme des seconds points de fréquence ;
déterminer un troisième point de fréquence, le troisième point de fréquence étant situé entre deux seconds points de fréquence adjacents ;
déterminer une amplitude correspondant au troisième point de fréquence sur la base d'une courbe prédéfinie de l'effet de masquage de l'oreille humaine, l'amplitude étant utilisée pour représenter l'intensité d'un signal ; et
générer le signal de masquage sur la base de la valeur de fréquence du troisième point de fréquence et de l'amplitude correspondant au troisième point de fréquence.

4. Le procédé selon la revendication 2, dans lequel la génération du signal de masquage sur la base du premier point de fréquence comprend :
s'il existe une pluralité de premiers points de fréquence, et qu'une différence de valeur de fréquence entre un premier point de fréquence ayant la plus grande valeur de fréquence et un premier point de fréquence ayant la plus petite valeur de fréquence parmi tous les premiers points de fréquence est supérieure ou égale à un premier seuil de fréquence prédéfini, sélectionner parmi tous les premiers points de fréquence, et déterminer comme quatrièmes points de fréquence, un premier point de fréquence ayant la plus grande valeur de densité spectrale de puissance correspondante, le premier point de fréquence ayant la plus grande valeur de fréquence et le premier point de fréquence ayant la plus petite valeur de fréquence ;
sélectionner respectivement, et déterminer comme cinquièmes points de fréquence, un point de fréquence proche de chacun des quatrièmes points de fréquence, entre les quatrièmes points de fréquence, et à un emplacement dont la différence de valeur de fréquence est inférieure ou égale à un second seuil de fréquence prédéfini ;
déterminer une amplitude correspondant au cinquième point de fréquence sur la base d'une courbe prédéfinie de l'effet de masquage de l'oreille humaine, l'amplitude étant utilisée pour représenter l'intensité d'un signal ; et
générer le signal de masquage sur la base de la valeur de fréquence du cinquième point de fréquence et de l'amplitude correspondant au cinquième point de fréquence.

5. Le procédé selon la revendication 2, dans lequel la génération du signal de masquage sur la base du premier point de fréquence comprend :
s'il existe une pluralité de premiers points de fréquence, et si la différence de valeur de fréquence entre un premier point de fréquence ayant la plus grande valeur de fréquence et un premier point de fréquence ayant la plus petite valeur de fréquence parmi tous les premiers points de fréquence est supérieure ou égale à un premier seuil de fréquence prédéfini, sélectionner une deuxième quantité prédéfinie de premiers points de fréquence dans chaque intervalle de points de fréquence par ordre décroissant des valeurs de densité spectrale de puissance correspondantes, et déterminer cette deuxième quantité prédéfinie de premiers points de fréquence comme sixièmes points de fréquence, où la différence de valeur de fréquence entre un point de fréquence final et un point de fréquence initial dans chaque intervalle de points de fréquence est inférieure ou égale à un troisième seuil de fréquence prédéfini, et la quantité de premiers points de fréquence comprise dans chaque intervalle de points de fréquence est supérieure ou égale à une troisième quantité prédéfinie ;
déterminer un septième point de fréquence correspondant à chaque intervalle de points de fréquence, le septième point de fréquence étant situé entre deux sixièmes points de fréquence adjacents dans l'intervalle de points de fréquence correspondant ;
déterminer une amplitude correspondant au septième point de fréquence sur la base d'une courbe prédéfinie de l'effet de masquage de l'oreille humaine, l'amplitude étant utilisée pour représenter l'intensité d'un signal ; et
générer le signal de masquage sur la base de la valeur de fréquence du septième point de fréquence et de l'amplitude correspondante au septième point de fréquence.

6. Le procédé selon la revendication 2, dans lequel la génération du signal de masquage sur la base du premier point de fréquence comprend :
s'il n'existe qu'un seul premier point de fréquence, sélectionner séparément un point de fréquence de chaque côté du premier point de fréquence et déterminer ces points de fréquence comme huitièmes points de fréquence ;
déterminer une amplitude correspondant au huitième point de fréquence sur la base d'une courbe prédéfinie de l'effet de masquage de l'oreille humaine, l'amplitude étant utilisée pour représenter l'intensité d'un signal ; et
générer le signal de masquage sur la base de la valeur de fréquence du huitième point de fréquence et de l'amplitude correspondante au huitième point de fréquence.

7. Le procédé selon la revendication 2, dans lequel la génération du signal de masquage sur la base du premier point de fréquence comprend :
s'il n'existe qu'un seul premier point de fréquence, sélectionner séparément un point de fréquence de chaque côté du premier point de fréquence et déterminer ces points de fréquence comme neuvièmes points de fréquence ;
sélectionner respectivement un point de fréquence entre chacun des neuvièmes points de fréquence et le premier point de fréquence, et déterminer ce point de fréquence comme dixième point de fréquence ;
déterminer une amplitude correspondant au dixième point de fréquence en fonction d'une courbe prédéfinie d'effet de masquage de l'oreille humaine, l'amplitude étant utilisée pour représenter la puissance d'un signal ; et
générer le signal de masquage en fonction de la valeur de fréquence du dixième point de fréquence et de l'amplitude correspondant au dixième point de fréquence.

8. Le procédé selon la revendication 1, dans lequel la génération (S301) d'un signal de bruit rose selon la première densité spectrale de puissance comprend :
déterminer (S501) une seconde puissance moyenne, la seconde puissance moyenne correspondant à la valeur moyenne des densités spectrales de puissance de tous les onzièmes points de fréquence, le onzième point de fréquence étant un point dont la valeur de densité spectrale de puissance est inférieure ou égale à la première puissance moyenne et qui appartient à tous les points de fréquence correspondant à la première densité spectrale de puissance, la première puissance moyenne correspondant à la valeur moyenne des densités spectrales de puissance de tous les points de fréquence correspondant à la première densité spectrale de puissance ;
obtenir (S502) un gain de filtrage passe-bande de bruit rose prédéfini correspondant à la seconde puissance moyenne ;
ajuster (S503) le gain d'un premier filtre passe-bande au gain de filtrage passe-bande de bruit rose prédéfini ; et
effectuer (S504), en utilisant le premier filtre passe-bande obtenu après l'ajustement du gain, le filtrage passe-bande sur un signal provenant d'une source de bruit rose afin de générer le signal de bruit rose.

9. Le procédé selon la revendication 2, dans lequel la génération (S301) du premier signal vocal selon la première densité spectrale de puissance comprend :
déterminer (S601) une première puissance moyenne sur la base de la première densité spectrale de puissance, la première puissance moyenne correspondant à la valeur moyenne des densités spectrales de puissance de tous les points de fréquence correspondant à la première densité spectrale de puissance ;
déterminer (S602) les douzièmes points de fréquence, le douzième point de fréquence étant un point dont la valeur de densité spectrale de puissance correspondante est supérieure à la première puissance moyenne et qui appartient à tous les points de fréquence correspondant à la première densité spectrale de puissance ;
sélectionner (S603) une quatrième quantité prédéfinie de douzièmes points de fréquence parmi tous les douzièmes points de fréquence dans l'ordre décroissant des valeurs de densité spectrale de puissance correspondantes, et déterminer cette quatrième quantité prédéfinie de douzièmes points de fréquence comme treizièmes points de fréquence ;
générer (S604) un filtre d'encoche basé sur le treizième point de fréquence, la fréquence d'encoche du filtre d'encoche comportant la valeur de fréquence du treizième point de fréquence ; et
réalisation (S605), en utilisant le filtre coupe-bande, d'un filtrage coupe-bande sur un signal généré par une source de bruit rose, afin de générer le premier signal vocal.

10. Le procédé selon la revendication 2, dans lequel la génération (S202) d'une première densité spectrale de puissance comprend :
réaliser un filtrage passe-bande sur le signal vocal de liaison descendante à l'aide d'un deuxième filtre passe-bande, pour obtenir un premier signal dans une première plage de bande passante, où une première bande passante correspond à la bande passante du deuxième filtre passe-bande ;
calculer la densité spectrale de puissance du premier signal ; et
déterminer la densité spectrale de puissance du premier signal comme étant la première densité spectrale de puissance.

11. Le procédé selon l'une quelconque des revendications 1 à 10, dans lequel le dispositif électronique (100, 1900) comprend en outre un troisième module d'émission sonore, ledit troisième module d'émission sonore étant disposé à un troisième emplacement proche du premier emplacement, et le procédé comprend en outre :
générer un troisième signal vocal, ledit troisième signal vocal étant obtenu après un traitement de délai appliqué au signal vocal de liaison descendante et présentant le même délai que le premier signal vocal ; et
émettre le troisième signal vocal à l'aide du troisième module d'émission sonore au même moment de sortie.

12. Un dispositif électronique (100, 1900), dans lequel ledit dispositif comprend un premier module d'émission sonore (401, 1901) et un deuxième module d'émission sonore (402, 1902), le premier module d'émission sonore (401, 1901) est un module d'émission sonore à écran céramique et est disposé à un premier emplacement du dispositif électronique (100, 1900), le premier emplacement étant situé sur l'écran (194) et proche de l'oreille d'un utilisateur lorsque celui-ci tient le dispositif électronique (100, 1900) pour téléphoner, le deuxième module d'émission sonore (402, 1902) est situé à un deuxième emplacement différent du premier, le dispositif électronique (100, 1900) comprend également une mémoire (121, 1903) et un processeur (110, 1904), lesquels sont couplés ; la mémoire (121, 1903) étant conçue pour stocker le code du programme informatique, ledit code de programme informatique comprenant des instructions informatiques, et lorsque le processeur (110, 1904) exécute ces instructions informatiques, le dispositif électronique (100, 1900) est apte à mettre en œuvre la méthode selon l'une quelconque des revendications 1 à 11.

13. Un support de stockage informatique, dans lequel le support de stockage informatique contient un programme informatique ou des instructions, et lorsque le programme informatique ou les instructions sont exécutés sur un processeur (110, 1904) d'un dispositif électronique (100, 1900) comprenant un premier ensemble de production sonore (401, 1901) et un second ensemble de production sonore (402, 1902), le premier ensemble de production sonore (401, 1901) étant un ensemble de production sonore à écran actionné par céramique et étant disposé à un premier emplacement du dispositif électronique (100, 1900), le premier emplacement étant situé sur l'écran (194) et proche de l'oreille de l'utilisateur lorsque ce dernier tient le dispositif électronique (100, 1900) pour un appel, le second ensemble de production sonore (402, 1902) étant disposé à un second emplacement différent du premier emplacement, le dispositif électronique (100, 1900) comprenant en outre une mémoire (121, 1903) et le processeur (110, 1904), la mémoire (121, 1903) et le processeur (110, 1904) étant connectés, le dispositif électronique (100, 1900) étant habilité à mettre en œuvre la méthode selon l'une quelconque des revendications 1 à 11.
